# EUROPEAN PATENT SPECIFICATION

(11) **EP 2 082 651 B1**
(45) Date of publication and mention of the grant of the patent: **05.08.2015**
(21) Application number: 07766945.5
(22) Date of filing: 15.06.2007
(51) Int. Cl.: A23L 2/60, A23F 3/14, A23L 2/00, A23L 2/38, A23L 2/52

(54) **BEVERAGE PACKED IN CONTAINER**
IN BEHÄLTNIS ABGEPACKTES GETRÄNK
BOISSON CONDITIONNÉE DANS UN CONTENEUR

(30) Priority: 13.11.2006 JP 2006306456; 27.12.2006 JP 2006353187
(43) Date of publication of application: 29.07.2009
(73) Proprietor: Kao Corporation, Chuo-Ku Tokyo 103-8210 (JP)
(72) Inventor: FUKUDA, Masahiro, Sumida-ku Tokyo 131-8501 (JP); TAKAHASHI, Hirokazu, Sumida-ku Tokyo 131-8501 (JP); KUSAKA, Ryo, Sumida-ku Tokyo 131-8501 (JP); ITAYA, Eri, Sumida-ku Tokyo 131-8501 (JP)
(74) Representative: Hoffmann Eitle
(86) International application number: PCT/JP2007/000638
(87) International publication number: WO 2008/059609

(56) References cited:
- WO-A-2005/053415
- WO-A1-2006/051980
- JP-A- 2005 058 210
- JP-A- 2005 160 368
- JP-A- 2005 176 606
- JP-A- 2005 176 666
- JP-A- 2006 136 244
- JP-A- 2006 166 770
- JP-A- 2006 166 771
- JP-A- 2006 191 924
- JP-B1- 3 590 050
- JP-B1- 3 590 051
- JP-B1- 3 615 213
- JP-B1- 3 742 094
- US-A1- 2005 129 829

## Description

### Field of the Invention

The present invention relates to a packaged beverage containing a high concentration of non-polymer catechins and having reduced bitterness.

### Background of the Invention

Catechins are reported to possess a suppression effect on cholesterol level and an inhibitory effect on amylase activity, (e.g. Patent Documents 1 and 2). For such physiological effects to materialize, catechins need to be digested in a large amount. Thus there has been an urgent need for developing a technology which is able to add a high concentration of catechins to a beverage. Examples of such technologies include a method that is comprised of adding catechins in a dissolved state to a beverage using a concentrate of green-tea extract material (e.g. Patent Documents 3 to 5).

However, a beverage containing a high concentration of catechins is liable to have a strongly bitter taste upon drinking, and therefore is not suitable for regular use. Of these beverages, some methods for blending cyclodextrins are reported to reduce the bitterness of tea beverages (e.g. Patent Documents 1 to 7). For example, Patent Document 1 discloses a composition containing a tea extract with cychlodextrin in an amount of 2.5 parts by mass or more per part by mass (dry mass) of the tea extract. Patent Document 2 discloses a method for adsorbing and removing caffeine by subjecting a tea extract to steam-activated charcoal when producing a beverage containing 1% by mass or more of catechins, 0.1% by mass or less of caffeine, and 0.1 to 20% by mass of cyclodextrin. Each of Patent documents 3 and 4 discloses a bottled drink containing certain amounts of catechins and cyclodextrin.

Patent Document 5 discloses a bottled drink which is reduced in bitterness by blending cluster dextrin with a high concentration of tea catechins. Patent Document 6 discloses an inhibitory effect of cyclodextrin on the bitterness of a high concentration of catechins. Patent Document 7 discloses a sweet composition that is prepared using sucralose in combination with various kinds of sweetening agents, thereby bringing together the sweet taste peculiar to sucralose and such a supplemented sweet taste lacked in sucralose. This document, however, makes no mention about a technology for reducing the bitterness of a beverage containing a high concentration of catechins.

[Patent Document 1] JP-A-03-168046
[Patent Document 2] JP-A-10-4919
[Patent Document 3] JP-A-2002-238518
[Patent Document 4] JP-A-2004-129662
[Patent Document 5] JP-A-2004-159641
[Patent Document 6] JP-A-2004-254511
[Patent Document 7] JP-A-2000-24273

### Additional prior art documents include:

JP 2006-136244 A which describes an instant tea reportedly giving a strong tea flavour while suppressing astringency and bitterness inherent in catechins. The tea contains 0.5-1.1 mass pts.wt. of cyclodextrin and 0.0003-0.003 mass pt.wt. of thaumatin based on 1 mass pt.wt. of non-polymeric catechins.

US 2005/129829 which describes a non-tea-based, packaged beverage with a green tea extract mixed therein containing the following ingredients (A) and (B): (A) 0.06 to 0.5 wt. % of non-polymer catechins, and (B) 9 to 13.5 mM of citric acid or a salt thereof. The beverage contains catechins at a high concentration and reportedly has reduced bitterness and astringency.

### Disclosure of the Invention

The present invention provides a packaged beverage comprising:
(A) 0.05 to 0.5% by mass of non-polymer catechins; and
(B2) 0.00001 to 0.005% by mass of thaumatin,
wherein a percentage of (C) a non-epicatechin of non-polymer catechins in (A) is 5 to 25% by mass.

In addition, the present invention provides a process of suppressing a bitter taste and stabilizing color tone in a beverage containing 0.05 to 0.5% by mass of (A) non-polymer catechins, comprising the step of:
adding 0.00001 to 0.005% by mass of thaumatin to the beverage.

### Embodiments of the Invention

As mentioned above, a large amount of cyclodextrin is necessary to reduce the bitterness arising from a post-heat sterilization treatment, where the treatment is performed by adding cyclodextrin to a packaged beverage containing a high concentration of non-polymer catechins. However, adding a large amount of cyclodextrin to a packaged beverage runs the risk of impairing the original flavor of a beverage, caused by the flavor of cyclodextrin itself. As a result, the content range of cyclodextrin for such use is limited. Merely adding artificial sweetening agents such as sucralose to a packaged beverage is not enough to reduce the bitterness of such a beverage containing a high concentration of non-polymer catechins.

Therefore, the present invention provides a means for reducing the bitterness of a packaged beverage which contains a high concentration of non-polymer catechins without impairing the flavor of the packaged beverage.

The present inventors have conducted an intensive research aimed at reducing the bitterness of a packaged beverage which contains a high concentration of non-polymer catechins without reducing the flavor thereof after heat sterilization. As a result, it has been found that an excellent inhibitory effect on the bitterness of a packaged beverage is obtained by either a combined use of glycyrrhizin, thaumatin, sorbitol and another sweetening agent, or a combined use of erythritol and glucose at a specific ratio, and that a package beverage filled with the intrinsic flavor thereof can be obtained by such a combination. The present inventors have also discovered that even more excellent effect of reducing the bitterness of a beverage can be obtained by adjusting the percentage of gallates to non-polymer catechins. In particular, the inventors found that bitterness was reduced in a packaged beverage containing 0.05 to 0.5% by mass of (A) non-polymer catechins, and (B) a sweetening agent selected from the following sweetening agents (B1), (B2), (B3), and (B4):
(B1) 0.0001 to 0.5% by mass of glycyrrhizin;
(B2) 0.00001 to 0.005% by mass of thaumatin;
(B3) 0.01 to 5% by mass of (b31) sorbitol and 0.001 to 5% by mass of (b32) a sweetening agent other than sorbitol, in which a ratio of (b32)/(b31) (mass ratio) is 0.01 to 100; and
(B4) 0.01 to 5% by mass of (b41) erythritol, and 0.01 to 5% by mass of (b42) one or more kinds selected from glucose, fructose, a glucose-fructose syrup, and a fructose-glucose syrup.

Furthermore, the inventors found a method of suppressing a bitter taste of a beverage containing non-polymer catechins, that includes blending (B) the sweetening agent selected from the above sweetening agents (B1), (B2), (B3), and (B4) to a beverage containing 0.05 to 0.5% by mass of (A) the non-polymer catechins, and setting a rate of (C) non-polymeric catechin gallates in (A) the non-polymer catechins to 5 to 55% by mass.

While the scope of protection for the present invention is defined by the claims, for information purposes reference is also made to beverages containing alternative sweetening agents.

According to the present invention, there is provided a packaged beverage which contains a high concentration of non-polymer catechins and has a reduced bitter taste while having good flavor.

In the present invention, (A) non-polymer catechins are generic name including non-epicatechins such as catechin, gallocatechin, catechin gallate, and gallocatechin gallate, and epicatechins such as epicatechin, epigallocatechin, epicatechin gallate, and epigallocatechin gallate. The concentration of the non-polymer catechins is defined based on the total amount of the above eight kinds of non-polymer catechins.

The packaged beverage of the present invention contains non-polymer catechins in an amount of 0.05 to 0.5% by mass, preferably 0.08 to 0.4% by mass, more preferably 0.08 to 0.3% by mass, and even more preferably 0.09 to 0.2% by mass. If the content of the non-polymer catechins is within this limit, it is easy to take in a lot of non-polymer catechins easily. As such, non-polymer catechins are expected to exert physiological effects. In the maentime, if the content of non-polymer catechins is less than 0.05% by mass, sufficient physiological effect does not well work. If the content of non-polymer catechins exceeds 0.5% by mass, the bitterness of a beverage could soar.

The non-polymer catechins in the packaged beverage of the present invention include epicatechins formed of epigallocatechin gallate, epigallocatechin, epicatechin gallate, and epicatechin, and non-epcatechins formed of catechin gallate, gallocatechin gallate, gallocatechin, and catechin. Non-epicatechin is little found in the natural world, but it can be generated by thermal isomerization of an epicatechin. Therefore, the ratio ([(C)/(A)] ×100) of (C) a non-epicatechin of non-polymer catechins in (A) the non-polymer catechins which is used in the packaged beverage of the present invention is 5 to 25% by mass, preferably 8 to 20% by mass, more preferably 10 to 15% by mass from the standpoint of the flavor and the storage stability of non-polymer catechins.

The non-polymer catechins in the packaged beverage of the present invention include gallate-type catechins formed of epigallocatechin gallate, gallocatechin gallate, epicatechin gallate, and catechin gallate, and non-gallate-type catechins formed of epigallocatechin, gallocatechin, epicatechin, and catechin. Since a gallate, which is an ester-type non-polymer catechin, has strong bitterness, the ratio ([(D)/(A)]×100) of (D) non-polymer catechin gallates in (A) the non-polymer catechins which can be used in the packaged beverage of the present invention is preferably 5 to 55% by mass and more preferably 8 to 51% by mass from the standpoint of reducing the bitterness.

In the aforementioned packaged beverage which contains a high concentration of non-polymer catechins according to the present invention, the concentration of the non-polymer catechins can be adjusted by blending with, for example, the purified product of a green-tea extract material. Specifically, it may be an aqueous solution of the concentrate of a green-tea extract material, or the purified product of the green-tea extract material blended with a green-tea extract liquid, a semi-fermented tea extract liquid, or a fermented tea extract liquid. The term "purified product of the green-tea extract material" used herein may be any of those prepared by partially removing the water content from a solution extracted from green-tea leaves with hot water or a water-soluble organic solvent, followed by purification to enhance the concentration of non-polymer catechins. The extract material may be any of various forms including a solid, an aqueous solution, and slurry. The term "tea extract liquid", which is selected from green tea, semi-fermented tea, or fermented tea, means any of those without being subjected to concentration and purification.

The purified product of a green-tea extract material, which contains non-polymer catechins, can be selected from any of commercially-available products, such as Mitsui Norin Co., Ltd., "Polyphenon" ; ITO EN, LTD., "TEAFURAN" ; and Taiyo Kagaku Co., Ltd., "SUNPHENON". As long as the concentration of non-polymer catechins is in the above range, any purified product of these materials may be used. As a purification method, a concentrate of a green-tea extract material is suspended in water or a mixture of water and an organic solvent such as ethanol, the resulting precipitate is removed, and the solvent is then distilled off. As an alternative, an extract material obtained from tea leaves with hot water or a water-soluble organic solvent such as ethanol is concentrated and then purified further, or the extract material is directly purified.

Non-polymer catechins, which can be used in the packaged beverage of the present invention can lower the percentage of gallates by treating a green-tea purified product with tannase. The treatment with tannase is preferably carried out by addition of tannase so that it will be in the range of 0.5 to 10% by mass with respect to the non-polymer catechins in the green-tea extract material. The tannase treatment is carried out at a temperature of preferably 15 to 40°C and more preferably 20 to 30°C. The tannase treatment is carried out at a pH of preferably 4.0 to 6.0 and more preferably 4.5 to 6.0, and most preferably 5.0 to 6.0, at which the enzyme can be activated.

The content weight ratio [(E)/(A)] of (E) caffeine to (A) the non-polymer catechins is preferably 0.0001 to 0.16, more preferably 0.001 to 0.15, further preferably 0.01 to 0.14 and still further preferably 0.05 to 0.13. A much lower ratio of caffeine to the non-polymer catechins is undesirable for flavor balance. In contrast, much higher ratio of caffeine to the non-polymer catechins is undesirable because the natural appearance of beverage is impaired. The caffeine may be naturally-occurring caffeine present in green-tea extract materials, flavors, fruit juices, and so on, which can be used as raw materials, or may be the newly added caffeine.

(B1) Glycyrrhizin used in the packaged beverage disclosed herein may be any of those obtained by various methods. For example, it may be obtained from a glycyrrhiza extract material (Licorice Extract). The glycyrrhiza extract material is obtained from the roots and stolons of *Glycyrrhiza Labra L. glandulifera Regel et Herder*, or the like. The main sweet-tasting ingredient from glycyrrhiza is glycyrrhizinic acid (C₄₂H₆₂O₁₆=822.96). Glycyrrhiza is a perennial plant of Leguminosae and contains a lot of glycyrrhizins in the rhizome. The main origins are south Russia, China, Iran, Afghanistan, Pakistan, Turkey, Spain, and so on. Glycyrrhizin may have sweet taste even if diluted 20,000-fold and the chemical structure thereof is a combination of one molecule of glycyrrhizinic acid and two molecules of glucuronic acid, serving as a glycoside. In the glycyrrhiza root, it exists mainly in any of forms, such as calcium salt, potassium salt, and ammonium salt. It is a naturally-occurring safe sweetening agent with a degree of sweetness 250 times higher than that of sugar.

In the present disclosure, as the glycyrrhizin, one extracted and purified from licorice root is suitably used. For example, the formulated products are named as "Licos", "Licotin", and "Licomirin", and the like, which are derived from the name of licorice, and those products are each diluted with trisodium citrate or dextrin and processed for usability depending on its application (all of which are manufactured by Ikedatohka Industries Co., Ltd.). Further, examples of the products of licorice extract for food additives include Licogen Y (100% licorice extract), Glycymine C (45% licorice extract and 55% trisodium citrate), Glycymine (100% glycyrrhizin), and Glycymine W (17.5% glycyrrhizin, 35% trisodium citrate, and 47.5% dextrin) (all of which are manufactured by MARUZEN PHARMACEUTICALS CO., LTD.). A product having high purity of glycyrrhizin is preferred because the unpleasant taste is little when the product is blended in the beverage. Further, examples of the products include "Special grade glycynone", "first grade glycynone", "Glycynone GTS", "Glycynone GT1", "Glycynone GTY", "Glycynone M", and "Glycynone GYE" (all of which are manufactured by TOKIWA PHYTOCHEMICAL CO., LTD.), Licorice extract A, B, and C (manufactured by ALPS Pharmaceutical Ind. Co., Ltd.), and Likecine GP-96 (manufactured by RIKEN VITAMIN CO., LTD.).

These products may have sweetness of 40 to 50 times higher than that of sugar, but the taste differs from sugar or saccharin considerably. The sweetness of sugar is rich instead of afterwards. Sweetness comes out of sugar early, but it remains as harsh taste afterwards. Although these products are not so sweet in the beginning, they become sweet gradually and sweet taste will remain for a long time. Therefore, by using those products together with sugar, glucose, fruit sugar, or the like, the spectrum of taste can be expanded and a sweet taste with superior quality can be made.

For masking the bitterness of non-polymer catechins, the amount of glycyrrhizin added to the packaged beverage of the present disclosure is about 0.0001 to 0.5% by mass and preferably about 0.01 to 0.1% by mass to exert an effect.

In the packaged beverage according to the present disclosure, the bitterness of non-polymer catechins comes out after the sweetness thereof, while a sweetening agent which is commonly used expresses its sweetness early. Thus, such a sweetening agent cannot mask the bitterness of the non-polymer catechins sufficiently. However, a glycyrrhiza extract material used in the present disclosure can allow the bitterness of non-polymer catechins to be sensed at almost simultaneously with the sweetness of glycyrrhizin itself. Thus, it is considered that the bitterness of non-polymer catechins can be masked sufficiently.

(B2) Thaumatin used in the packaged beverage of the present invention is a protein-based sweet substance contained in fruits of *Thaumatococcus daniellii* of the family *Marantaceae*. The degree of sweetness is 2,600 to 3,100 times higher than that of sugar. It has neither a bitter taste nor an astringent taste, but having invigorating sweetness. Thus, it is marketed as a good sweetening agent for foodstuffs. In addition, thaumatin also has an action of reinforcing characteristic flavor the food material itself has.

Thaumatin, which is used in the packaged beverage of the present invention, is one extracted and purified from fruits of *Thaumatococcus daniellii* of the family *Marantaceae*. Alternatively, it may be a thaumatin preparation, such as those under the trade names SAN SWEET T, SAN SWEET T-147, NEO SAN MARK DC, and NEO SAN MARK AG from San-Ei Gen F.F.I., Inc., and those under the trade name Talin from British Tate & Lyle Co., Ltd.

Thaumatin used in the packaged beverage of the present invention is added at a final concentration (i.e., the concentration thereof in the packaged beverage) of 0.00001 to 0.005% by mass, more preferably 0.00002 to 0.001% by mass, and particularly preferably 0.0001 to 0.0005% by mass for the effects of reducing the bitterness of the final packed beverage and preventing the flavor thereof from decreasing. Further, the concentration of thaumatin can be determined using an antibody technique described in JP-A-2005-10104.

In the present invention, the bitterness of non-polymer catechins comes out after sweetness, and thus, the sweetness of a sweetening agent to be used in general is expressed too early and the bitterness of non-polymer catechins cannot be masked sufficiently. In contrast, thaumatin used in the present invention can cause a sense of sweetness of thaumatin itself almost at the same time as that of the bitterness of non-polymer catechins. Therefore, it is thought that the bitterness of non-polymer catechins can be masked well.

(b31) Sorbitol to be used in the packaged beverage of the present disclosure is a sugar alcohol manufactured by a glucose reduction method. Commercially-available products thereof include Sorbit L-70 (aqueous D-sorbitol 70% solution, TOWA-KASEI Co., Ltd.), Sorbit ME (San-Ei Sucrochemical Co., Ltd.), and Neo Sorb (Roquette Pharma).

(b31) Sorbitol used in the packaged beverage of a the present disclosure is added at a concentration, that is, the concentration thereof in the packaged beverage, of preferably 0.01 to 5% by mass, more preferably 0.05 to 5% by mass, and most preferably 0.1 to 1% by mass. In addition, it is blended so that the ratio (b31)/(A) (mass ratio) of sorbitol (b31) to non-polymer catechins (A) can be in the range of preferably 0.01 to 100, more preferably 0.1 to 10, and particularly preferably 0.5 to 5 from the standpoint of exerting effects of reducing the bitterness of the packaged beverage, preventing the flavor thereof from decreasing, and relieving indigestion.

(b32) The sweetening agent other than sorbitol used in the packaged beverage of the present disclosure is preferably selected from thaumatin, glycyrrhizin, sucralose, erythritol, maltitol, xylitol, lactitol, palatinito, mannitol, trehalose, a saccharified, reduced starch, and sucrose. By using (b32) the sweetening agent together with (b31) sorbitol, the bitter taste of (A) the non-polymer catechins can be alleviated synergistically.

Of those sweetening agents, the thaumatin is produced by extracting and purifying from a fruit of *Thaumatococcus daniellii* of *Marantaceae* family. Examples of the commercially-available products thereof include SAN SWEET T, SAN SWEET T-147, NEO SAN MARK DC, and NEO SAN MARK AG (San-Ei Gen F.F.I., Inc.) and Tarin (Tate & Lyle PLC.). The glycyrrhizin is produced by extracting and purifying from the licorice root and examples of the commercially-available products thereof include Licogen Y (100% licorice extract), Glycymine C (45% licorice extract and 55% trisodium citrate), Glycymine (100% glycyrrhizin), and Glycymine W (17.5% glycyrrhizin, 35% trisodium citrate, and 47.5% dextrin) (MARUZEN PHARMACEUTICALS CO.). The sucralose is produced by a synthesis method using a sucrose as a raw material and examples of the commercially-available products thereof include sucralose (San-Ei Gen F.F.I., Inc.) and Splendor. The erythritol is produced by a fermentation method using glucose as a raw material and an example of the commercially-available products thereof includes Erythritol (Mitsubishi-Kagaku Foods Corporation). The maltitol is produced by a reduction method for maltose and examples of the commercially-available products thereof include Maltimate (SAN-EI SUCROCHEMICAL CO., LTD) and MABIT (HAYASHIBARA SHOJI, INC.). The xylitol is produced by a reduction method for xylose and examples of the commercially-available products thereof include Xylit (TOWA-KASEI CO., LTD.), and Xylisorb (Roquette Pharma). The lactitol is produced by a reduction method for lactose and an example of the commercially-available products thereof includes Milhen (TOWA-KASEI CO., LTD.). The Palatinito is produced by a transferase method from a sugar and examples of the commercially-available products thereof include Reduced Palatinose (Mitsui Sugar Co., Ltd.) and Isomalt (Roquette Pharma). The mannitol is produced by a reduction method for a sugar and examples of the commercially-available products thereof include Mannitto (TOWA-KASEI CO., LTD.) and Mannitol and Pearlitol (Roquette Pharma). The trehalose is produced by a fermentation method and from a starch and an example of the commercially-available products thereof includes Treha (HAYASHIBARA SHOJI, INC.). The saccharified, reduced starch is produced by a reduction method of lactose and an example of the commercially-available products thereof includes PO-60 (TOWA-KASEI CO., LTD). Examples of the sucrose include a commercially-available superfine sugar, a granulated sugar, a coarse sugar, and a liquid sugar.

In the present invention, the bitterness of non-polymer catechins on drinking comes out after the sweetness thereof, while a common sweetening agent expresses its sweetness early. Thus, such a sweetening agent cannot mask the bitterness of the non-polymer catechins sufficiently. However, (b31) sorbitol used in the present disclosure can allow the bitterness of non-polymer catechins to be sensed at almost simultaneously with the sweetness of sorbitol itself. Thus, it is considered that the bitterness of non-polymer catechins can be masked sufficiently. It is estimated that the combined sweetening agent of (b32) may exert a synergistic effect of complementing the early sweetness.

Therefore, in a non-tea beverage, (b32) the sweetening agent other than sorbitol draws out sweetness at the beginning of drinking, and then (b31) sorbitol keeps the sweetness while exerting an effect of masking the bitterness of non-polymer catechins. Among (b32) the sweetening agents, a synergistic effect can be exerted in particular by the combined use with thaumatin, glycyrrhizin, sucralose, or erythritol. In tea beverages, such as green tea, oolong tea, and tea, a combined use of (b31) sorbitol and any of sweetening agent of (b32), specifically thaumatin or glycyrrhizin can mask the bitterness of non-polymer catechins.

The sweetening agent of (b32) used in the present disclosure may have a final concentration (i.e., the concentration thereof in the packaged beverage) of preferably 0.001 to 5% by mass, more preferably 0.05 to 5% by mass, and particularly preferably 0. 1 to 1% by mass from the standpoint of exerting effects of reducing the bitterness of the packaged beverage, preventing the flavor thereof from decreasing, and relieving indigestion.

Of those (B4) sweetening agents used in the packaged beverage of the present invention, the glucose content is preferably 0.01 to 5% by mass, more preferably 0.1 to 5% by mass, and particularly preferably 1.0 to 4% by mass. The fructose content is preferably 0.01 to 5% by mass, more preferably 0.1 to 5% by mass, and particularly preferably 1.0 to 5% by mass. The sucrose content is preferably 0.01 to 5% by mass, more preferably 0.1 to 4% by mass, and particularly preferably 1.0 to 3.8% by mass. The content of the fructose-glucose syrup is preferably 0.01 to 5% by mass, more preferably 0.1 to 5% by mass, and even more preferably 1.0 to 5% by mass.

(b41) Erythritol used in the packaged beverage of the present invention is preferable in that it is a non-calorie sweetening agent. In the packaged beverage of the present invention, the content of erythritol is 0.01 to 5% by mass, preferably 0.02 to 3% by mass, and particularly preferably 0.03 to 2% by mass.

In the present invention, a combined use of one or more selected from glucose, fruit sugar, sucrose, glucose-fructose syrup, and (b42) a fructose-glucose syrup and (b41) erythritol can cause a synergistic effect of increasing osmotic pressure. Among sugar alcohols, erythritol is particularly preferable because it is more effective to increase osmotic pressure. In the packaged beverage of the present invention, an osmotic pressure of 280 to 600 mOsm/L, preferably 290 to 500 mOsm/L, and more preferably 300 to 400 mOsm/L, makes it easy to incorporate electrolytes such as sodium and potassium. An osmotic pressure of less than 280 mOsm/L leads to an insufficient uptake of electrolytes, while an osmotic pressure of over 600 mOsm/L tends to cause an increase in calories because of allowing sweetening agents to be blended too much.

In the packaged beverage of the present invention, when (B4) is added, the calories of the beverage is calculated based on 4 Kcal per gram of each of glucose, fructose, sugar, a glucose-fructose syrup, and a fructose-glucose syrup in 100 ml of the beverage. Also, it is based on zero Kcal per gram of erythritol in 100 ml of the beverage. Here, the packaged beverage of the present invention has a low calorie content of preferably 40 kcal/240 mL or less, more preferably 1 to 38 kcal/240 mL, and particularly preferably 2 to 35 kcal/240 mL.

In the packaged beverage of the present invention, further, any of artificial sweetening agents and glycerols can be used as a sweetening agent such an extent that it can be used without extra calories. The content of any of these sweetening agents in the packaged beverage of the present invention is preferably 0.0001 to 20% by mass, more preferably 0.001 to 15% by mass, and particularly preferably 0.01 to 10% by mass.

If the content of sweetening agents is too small in the packaged beverage of the present invention, there is little sweetness. It is preferable that the degree of sweetness is set to 2 or more and preferably 2 to 8 when that of sugar is 1, otherwise an acid taste and a salty taste will be out of balance (references: JIS Z8144, Sensory inspection - Terminology, No. 3011, sweetness; JIS Z9080, Sensory inspection - Method, Test method; Terminology dictionary for beverages 4-2 Classification of sweetness, Literature 11 (Beverage Japan); Characteristic grading test, mAG test, ISO 6564-1985 (E), "Sensory Analysis-Methodology-Flavour profile method", etc). If the degree of sweetness becomes 8 or more, it will be too sweet, feeling caught in the throat will be strong, and feeling down the throat will fall.

Any sweetening agent other than those mentioned above may be used in the packaged beverage of the present invention. Sweetening agents other than those mentioned above, which can be used, include carbohydrates, glycerols, and artificial sweetening agents. The content of any of these sweetening agents in the packaged beverage of the present invention is preferably 0.0001 to 20% by mass, more preferably 0.001 to 15% by mass, and particularly preferably 0.01 to 10% by mass. If the content of sweetening agents is too small in the packaged beverage of the present invention, there is little sweetness. It is preferable that the degree of sweetness is set to 2 or more when that of sucrose is 1, otherwise an acid taste and a salty taste will be out of balance (references: JIS Z8144, Sensory inspection - Terminology, No. 3011, sweetness; JIS Z9080, Sensory inspection - Method, Test method; Terminology dictionary for beverages 4-2 Classification of sweetness, Literature 11 (Beverage Japan); Characteristic grading test, mAG test, ISO 6564-1985 (E), "Sensory Analysis-Methodology-Flavour profile method", etc) . On the other hand, if the degree of sweetness becomes 8 or more, it will be too sweet, feeling caught in the throat will be strong, and feeling down the throat will fall. These sweetening agents also include those of a tea extract material.

Carbohydrate-based sweetening agents include complex polysaccharides or mixtures thereof.

A preferable example of complex polysaccharide is maltodextrin. In addition, any of carbohydrate derivatives and polyhydric alcohols such as glycerols can be also used in the present invention. Glycerols, for example 0.1 to 15% by mass, preferably 0.2 to 10% by mass thereof, can be used in the packaged beverage of the present invention.

Examples of the artificial sweetening agent out of the sweetening agents used in the packaged beverage of the present invention include high sweetness sweetening agents such as aspartame, sucralose, saccharin, cyclamate, acesulfame-K, L-aspartyl-L-phenylalanine lower alkyl ester, L-aspartyl-D-alanine amide, L-aspartyl-D-serine amide, L-aspartyl-hydroxymethyl alkane amide, and L-aspartyl-1-hydroxyethyl alkane amide, and synthetic alkoxy aromatic compounds. The content of the artificial sweetening agent is 0.0001 to 20% by mass. In addition, stebinoside and another natural source sweetening agent also can be used.

The packaged beverage of the present invention can contain 0.001 to 0.5% by mass of sodium and/or 0.001 to 0.2% by mass of potassium. Here, the total concentration of sodium and potassium is preferably 0.001 to 0.5% by mass. If the total thereof is less than 0.001% by mass, the taste tends to be sensed poor depending on the scene of drinking. Thus, it is unfavorable. If it exceeds 0.5% by mass, the taste of salts themselves is too strong and the beverage tends to be not preferred for long-term drinking.

As the sodium used in the present invention, sodium salts which can be easily obtained, such as sodium ascorbate, sodium chloride, sodium carbonate, sodium hydrogen carbonate, sodium citrate, sodium phosphate, sodium hydrogen phosphate, sodium tartrate, sodium benzoate, and mixtures thereof can be blended. In addition, the sodium includes sodium derived from an added fruit juice or a tea component. With the increase in the sodium concentration, the color of the beverage is changed to larger extent. From the viewpoint of the safety of the product, the sodium content in the packaged beverage of the present invention is preferably 0.001 to 0.5% by mass, more preferably 0.002 to 0.4% by mass, and still more preferably 0.003 to 0.2% by mass.

The concentration of the potassium used in the present invention can be increased by adding a compound other than the potassium contained tea extract liquid. For example, potassium salts such as potassium chloride, potassium carbonate, potassium sulfate, potassium acetate, potassium hydrogen carbonate, potassium citrate, potassium phosphate, potassium hydrogen phosphate, potassium tartrate, potassium sorbate, or a mixture thereof may be blended and the potassium include potassium derived from a fruit juice or a flavor which is blended therein. The concentration of the potassium has larger influence on the color tone at the time of high-temperature, long-term storage compared to the concentration of the sodium. From the viewpoint of the product stability, the potassium content in the packaged beverage of the present invention is preferably 0.001 to 0.2% by mass, more preferably 0.002 to 0.15% by mass, and still more preferably 0.003 to 0.12% by mass.

An acidulant can be used in the packaged beverage of the present invention. If the concentration of the acidulant is small, an acid taste is too weak while a bitter taste and an astringent taste can be reduced. On the other hand, if the concentration of the acidulant is too high, an acid taste is strong and a bitter taste and an astringent taste can be also enhanced. The acidulant in the present invention is one or more kinds selected from ascorbic acid, citric acid, gluconic acid, succinic acid, tartaric acid, lactic acid, fumaric acid, malic acid, and salts thereof. Even if one of them is used alone, the pH becomes one capable of being stored for a long period of time, but in order to obtain appropriate acid taste, those acidulants are preferably used together with salt thereof. Specific examples thereof include trisodium citrate, monopotassium citrate, tripotassium citrate, sodium gluconate, potassium gluconate, sodium tartrate, trisodium tartrate, potassium hydrogen tartrate, sodium lactate, potassium lactate, and sodium fumarate.

Other acidulants include adipic acid and fruit juices extracted from natural ingredients. The content of the acidulants in the packaged beverage of the present invention is preferably 0.01 to 0.7% by mass and particularly preferably 0.02 to 0.6% by mass as a whole. In addition, any of inorganic acids and inorganic acid salts can also be used. Examples of the inorganic acids and inorganic acid salts include diammonium hydrogen phosphate, ammonium dihydrogen phosphate, dipotassium hydrogen phosphate, disodium hydrogen phosphate, sodium dihydrogen phosphate, trisodium metaphosphate, and tripotassium phosphate. Those inorganic acids and inorganic acid salts are contained in the packaged beverage in an amount of 0.01 to 0.5% by mass and particularly preferably 0.02 to 0.3% by mass.

From the viewpoints of the flavor and the storage stability, the pH of the packaged beverage of the present invention is preferably in a range of 2.5 to 7.0, more preferably 3.0 to 6.5, and particularly preferably 3.8 to 6.5. That is, if the beverage has a pH of less than 2.5, an acid taste becomes strong, the content of non-polymer catechins decreases during the long-term storage, and facilitates the precipitation of a glycyrrhiza extract material itself. In addition, if pH exceeds 5.1, a decrease in content of non-polymer catechins is caused by a reaction with carbohydrates used together in long-term storage, or the like. The pH of the beverage may be adjusted in the above range by ascorbic acid or the salt thereof, citric acid, or the like, thereby obtaining an appropriate acid taste that allows the beverage to be stored for a long time.

Flavors and fruit juices can be blended with the beverage of the present invention to improve palatability. Natural flavors or synthetic flavors and juices can be used in the present invention. The flavor and fruit juice can be selected from a fruit juice, a fruit flavor, a plant flavor, and a mixture thereof. A combination of the fruit juice with a tea flavor, and more preferably a green-tea flavor or a black-tea flavor is particularly preferred. As preferred fruit juice, an apple, pear, lemon, lime, mandarin, grapefruit, cranberry, orange, strawberry, grape, kiwi, pineapple, passion fruit, mango, guava, raspberry, and cherry can be used. Even more preferred is a citrus juice of a grapefruit, orange, lemon, lime and mandarin, a juice of a mango, passion fruit, and guava, or a mixture thereof. Preferred natural flavors are jasmine, camomile, rose, peppermint, haw, mum, *Trapa japonica Flerov., Saccharum officinarum*, Litchi, and bamboo shoot. The fruit juice is contained in the beverage of the present invention preferably in an amount of 0.001 to 20% by mass, and more preferably 0.002 to 10% by mass. Particularly preferred flavors are citrus flavors including an orange flavor, lemon flavor, lime flavor, and grapefruit flavor. Various other fruit flavors instead of the citrus flavors, such as an apple flavor, grape flavor, raspberry flavor, cranberry flavor, cherry flavor, and pineapple flavor can be used. Those flavors may be derived or synthesized from a natural source such as a fruit juice and balm.

The flavors may include blends of various flavors, such as the blend of a lemon flavor and a lime flavor and the blend of a citrus flavor and selected spice (typical cola soft drink flavor). The beverage of the present invention can be blended with such a flavor in an amount of 0.0001 to 5% by mass and more preferably 0.001 to 3% by mass.

The packaged beverage of the present invention can further contain vitamins. Preferably, vitamin A, vitamin B, and vitamin E are added. In addition, other vitamins like vitamin D may be added. As the vitamin B, there is exemplified vitamin B's selected from inositol, thiamine hydrochloride, thiamine nitrate, riboflavin, riboflavin 5'-sodium phosphate, niacin, nicotinamide, calcium pantothenate, pyridoxine hydrochloride, and cyanocobalamin. Folic acid and biotin can be also used in the beverage of the present invention. Any of these vitamins is preferably in an amount of not less than 10% by mass of the daily requirement thereof (described in U.S. Reference Daily Intake (RDI) standard US2005/0003068).

The packaged beverage of the present invention can further contain minerals. Preferred minerals are calcium, chromium, copper, fluorine, iodine, iron, magnesium, manganese, phosphorus, selenium, silicon, molybdenum, and zinc. Particularly preferred minerals are magnesium, phosphorus, and iron.

In the packaged beverage of the present invention, cyclodextrins may be used together to reduce the bitterness of non-polymer catechins. Examples of cyclodextrins include α-cyclodextrin, β-cyclodextrin, and γ-cyclodextrin. The content of any of these cyclodextrins in the packaged beverage of the present invention is preferably 0.005 to 0.5% by mass, more preferably 0.02 to 0.3% by mass, and particularly preferably 0.05 to 0.25% by mass.

Thus, in the packaged beverage of the present invention, according to a component derived from a tea, an additive such as an antioxidant, a flavor, various esters, organic acids, organic acid salts, colorants, an emulsifier, a preservative, a seasoning, fruit extracts, vegetable extracts, nectar extracts, a pH adjustor, or a quality stabilizer may be mixed alone or those may be used in combination.

The packaged beverage of the present invention may be provided as a non-carbonated beverage. Alternatively, it may be provided as a carbonated beverage having moderate bubbling property with carbon dioxide. Thus, the beverage can reduce the bitterness of non-polymer catechins and successively provide a sense of softness and a sense of coolness. In addition, the beverage of a container of the present invention may be any of tea beverages or any of non-tea beverages. The tea beverages include non-fermented tea beverages such as a green-tea beverage, semi-fermented tea beverages such as oolong tea beverage, and fermented tea beverages, such as a tea beverage. Further, the packaged beverage of the present invention can also be provided as, for example, non-tea beverages including enhanced water, bottled water, sport drinks, and near water.

In the packaged beverage of the present invention, the calories of the beverage is calculated based on 4 Kcal per gram of each of glucose, fructose, and sucrose and zero Kcal per gram of erythritol in 100 ml of the beverage. Here, the packaged beverage of the present invention has a low calorie content of preferably 40 kcal/240 mL or less, more preferably 1 to 35 kcal/240 mL or less, and particularly preferably 2 to 30 kcal/240 mL or less.

A container which can be used for the packaged beverage of the present invention can be provided in any of usual configurations, such as a molded container mainly made of polyethylene terephthalate (so-called PET bottle), a metal can, a paper container combined with a metallic foil or a plastic film, and a bottle. The term "packaged beverage" used herein refers to any beverage that can be drunk without dilution.

In addition, the packaged beverage of the present invention can be manufactured under sterilization conditions as required by the regulation (the Food Sanitation Law in Japan) if a beverage can be subjected to thermal sterilization after being filled in a container such as a metal can. In contrast, if it is in a container such as a PET bottle or a paper container which cannot be subjected to retort sterilization, an applicable method may include subjecting a beverage to sterilization at high temperature within short time using a plate-type heat exchanger under the same sterilization conditions as those described above in advance, cooling the beverage to a predetermined temperature, and filling the beverage into a container after cooling. Another ingredient may be aseptically blended in the filled container. Further, the pH may be aseptically returned to neutral, after thermal sterilization under acidic conditions. Alternatively, the pH may be aseptically returned to acidic conditions after thermal sterilization under neutral conditions.

### EXAMPLE

### Measurement of non-polymer catechins and caffeine

A sample, which had been filtered through a membrane filter (0.8 µm) and then diluted with distilled water, was subjected to chromatography at a column temperature of 35°C by gradient elution. The measurement employed a high-performance liquid chromatograph (model: SCL-10AVP) manufactured by Shimadzu Corporation, which was fitted with an octadecyl group-introduced packed column for liquid chromatography, "L-Column, TM ODS" (4.6 mm φ×250 mm; product of Chemicals Evaluation and Research Institute, Japan). A mobile phase solution A was a 0.1 mol/L solution of acetic acid in distilled water and a mobile phase solution B was a 0.1 mol/L solution of acetic acid in acetonitrile. These solutions were each fed at a flow rate of 1 mL/min. The volume of the sample injected was 20 µL, and the wavelength of a UV detector was 280 nm (although the concentrations of catechins and caffeine were expressed by mass/volume% (% [w/v]), the content of each of them in the example is represented by mass by multiplication with the volume of the solution). The gradient conditions were set as follows.

| Time (minute(s)) | Concentration of solution A (volume%) | Concentration of solution B (volume%) |
|---|---|---|
| 0 | 97% | 3% |
| 5 | 97% | 3% |
| 37 | 80% | 20% |
| 43 | 80% | 20% |
| 43.5 | 0% | 100% |
| 48.5 | 0% | 100% |
| 49 | 97% | 3% |
| 60 | 97% | 3% |

### Measurement of sorbitol and erythritol

A sample, which had been filtered through a membrane filter (0.8 µm) and then diluted with distilled water, was subjected to chromatography using a high-performance liquid chromatograph manufactured by Shimadzu Corporation, which was fitted with each of Wakosil 5NH₂ 4.6 mm φ×250 mm (Wako Pure Chemical Industries, Ltd.) for erythritol and Shodex Sugar SP0810 8 mm φ×300 mm for sorbitol and used water as their respective mobile phases, followed by detection by a differential refractometer RID-10A (manufactured by Shimadzu Corporation). Other sugar alcohols are detectable with one of the above techniques.

### Measuring method of glycyrrhizin in glycyrrhiza extract material

A sample, which had been filtered through a membrane filter (0.8 µm) and then diluted with distilled water, was subjected to chromatography at a column temperature of 40°C using a high-performance liquid chromatograph (model: SCL-10AVP) manufactured by Shimadzu Corporation, which was fitted with a column Cosmosil 5C18AR (4.6 mm φ×250 mm: manufactured by NACALAI TESQUE, INC.). A mobile phase was an aqueous 0.1 mol/L acetic acid solution and an acetonitrile solution (16 : 9). The solution was fed at a flow rate of 0.8 mL/min. The volume of the sample injected was 20 µL, and the wavelength of a UV detector was 254 nm. By using a standard substance, it was confirmed that the glycyrrhiza extract material contained glycyrrhizin.

### Evaluation of flavor

A drink examination was carried out by five panelists.

### Storage test

Prepared beverages were stored at 37°C for 4 weeks and changes in color tones of the beverages before and after the storage were evaluated by visual observation carried out by five panelists under the following standards:
A: not changed, B: slightly changed, C: changed, D: significantly changed.

### Reference Example 1

A 100-g concentrate of a commercially-available green-tea extract material ("Poyphenon HG", Mitsui Norin Co., Ltd.) was dispersed in 900 g of 90.0% by mass of ethanol and matured for 30 minutes, followed by filtration through No. 2 filter paper with 0.2 µm in pore size. Subsequently, it was added with 200 mL of water and then concentrated under reduced pressure, thereby obtaining a purified product. The percentage of (A) non-polymer catechins in the resulting purified product was 15.2% by mass and the percentage of (C) non-polymer catechin gallates therein was 52.1% by mass. A 8.5-g fraction of the purified product of the green-tea extract material was dissolved in 3.0 g of aqueous 1% solution of Glycymin (100.0% glycyrrhizin, manufactured by MARUZEN PHARMACEUTICALS CO., LTD.). Subsequently, erythritol, anhydrous crystal glucose, grapefruit fruit-juice, anhydrous citric acid, trisodium citrate, dietary salt, L-ascorbic acid, and grapefruit flavor were added to make the total volume 1, 000 g. After the mixing, the mixture was subjected to UHT sterilization and filled in a PET bottle. The composition, the results of a flavor evaluation, and the results of a storage test of the packaged beverage are shown in Table 1.

### Reference Example 2

When manufacturing a purified product of the tea extract material in Example 1, a 75.0-g fraction of the resulting non-polymer catechins composition was charged into a stainless steel container and added with ion exchange water to make the total volume 1,000 g, followed by adjusting pH to 5.5 by adding 3.0 g of an aqueous solution of 5% by mass of sodium bicarbonate. Subsequently, it was added with a solution while being stirred under conditions of 150 r/min, 22°C. Here the solution was prepared by dissolving 0.27 g (2.4% with respect to the non-polymer catechins) of Kikkoman tannase KTFH (Industrial Grade, 500 U/g or more) in 1.07 g of ion exchange water. After 55 minutes, an enzyme reaction was terminated when pH decreased to 4.24. Subsequently, the stainless steel container was immersed in a hot bath at 95°C and held at 90°C for 10 minutes to completely deactivate enzyme activity, followed by cooling to 25°C. After that, condensation treatment was carried out. Non-polymer catechins of the purified product of the resulting green-tea extract material after the tannase treatment was 16.8% by mass and the percentage of non-polymer gallates was 39.7% by mass. A packaged beverage was prepared in a manner similar to Example 1, except for using 7.7 g of the purified product of the green-tea extract material. The composition, the results of a flavor evaluation, and the results of a storage test of the packaged beverage are shown in Table 1.

### Reference Example 3

A packaged beverage was prepared in a manner similar to Example 1, except for reducing the amount of aqueous 1% Glycymin solution to 0.3 g.

### Reference Example 4

A packaged beverage was prepared in a manner similar to Example 1, except for increasing the amount of aqueous 1% Glycymin solution to 30.0 g.

### Reference Example 5

Green-tea leaves (135 g) from Shizuoka pref. were added to ion exchange water (4 kg) which had been heated to 65°C, followed by extraction for 5 minutes. The tea leaves were then removed from the extract liquid, and the extract liquid was cooled to 25°C or less by a heat exchanger. Subsequently, precipitates and suspended solids were removed from the extract liquid through the Nel filter and then filtered through a disc-shaped depth filter ("Zeta Plus 10C"). A 100-g concentrate of a commercially-available green-tea extract material ("Poyphenon HG", Mitsui Norin Co., Ltd.) was dispersed in 900 g of 90.0% by mass of ethanol and matured for 30 minutes, followed by filtration through No. 2 filter paper with 0.2 µm in pore size. Subsequently, it was added with 200 mL of water and then concentrated under reduced pressure, thereby obtaining a purified product of the green-tea extract material. A 6.0-g fraction of the purified product of the green-tea extract material, 3.0 g of an aqueous 1% Glycymin solution, 210.0 g of the former green-tea extract liquid, 0.5 g of ascorbic acid, and 1.0 g of green-tea flavor were added and diluted, followed by adjusting pH to 4.0. After making the total volume 1,000 g, the mixture was subjected to UHT sterilization and filled in a PET bottle. The composition, the results of a flavor evaluation, and the results of a storage test of the packaged beverage are shown in Table 2.

### Reference Example 6

A packaged beverage was prepared in a manner similar to Example 5, except for reducing the amount of aqueous 1% Glycymin solution to 0.3 g.

### Reference Example 7

A packaged beverage was prepared in a manner similar to Example 5, except for increasing the amount of aqueous 1% Glycymin solution to 30.0 g.

### Reference Example 8

A 8.5-g fraction of the purified product of the green-tea extract material obtained in a manner similar to Example 5, 0.3 g of the concentrate of a tea extract liquid, 3.0 g of an aqueous 1% Glycymin solution, 0.5 g of ascorbic acid, and 1.0 g of a tea flavor were added and diluted, followed by making the total volume 1,000 g, the mixture was subjected to UHT sterilization and filled in a PET bottle. The composition, the results of a flavor evaluation, and the results of a storage test of the packaged beverage are shown in Table 2.

### Comparative Example 1

A packaged beverage was prepared in a manner similar to Example 1, except for increasing the amount of anhydrous crystal glucose to 12 g without using Glycymin and erythritol.

### Comparative Example 2

A packaged beverage was prepared in a manner similar to Example 1, except for reducing the amount of aqueous 1% Glycymin solution to 0.03 g and increasing the amount of anhydrous crystal glucose to 12 g without using erythritol.

### Comparative Example 3

A packaged beverage was prepared in a manner similar to Example 1, except for increasing the amount of anhydrous crystal glucose to 60 g without using the aqueous 1% Glycymin solution and erythritol.

### Comparative Example 4

A packaged beverage was prepared in a manner similar to Example 1, except for increasing the amount of the purified product of the green-tea extract material produced in Example 1 to 34.0 g and increasing the amount of anhydrous crystal glucose to 12 g without using erythritol.

### Comparative Example 5

A packaged beverage was prepared in a manner similar to Example 5, except that the aqueous 1% Glycymin solution was not added.

### Comparative Example 6

A packaged beverage was prepared in a manner similar to Example 5, except for reducing the amount of aqueous 1% Glycymin solution to 0.03 g.

### Comparative Example 7

A packaged beverage was prepared in a manner similar to Example 5, except for increasing the amount of the purified product of the green-tea extract material produced in Example 5 to 34.0 g.

As is evident from Table 1 and Table 2, the packaged beverage which contains a high concentration of non-polymer catechins can be significantly prevented from having a bitter taste when it is blended with 0.0001 to 0.5% by mass of glycyrrhizin. When the percentage of gallates was 5 to 55% by mass, further significant reduction in bitterness was attained.

**[Table 1]**

| | | Example 1* | Example 2* | Example 3* | Example 4* | Comparative Example 1 | Comparative Example 2 | Comparative Example 3 | Comparative Example 4 |
|---|---|---|---|---|---|---|---|---|---|
| Composition | Purified product of green-tea extract material with non-polymer catechins (% by mass) | 0.85 | 0.77 | 0.85 | 0.85 | 0.85 | 0.85 | 0.85 | 3.4 |
| | Glycymin (% by mass) | 0.003 | 0.003 | 0.0003 | 0.03 | - | 0.00003 | - | 0.003 |
| | Erythritol (% by mass) | 0.8 | 0.8 | 0.8 | 0.8 | - | - | - | - |
| | Anhydrous crystal glucose (% by mass) | 0.4 | 0.4 | 0.4 | 0.4 | 1.2 | 1.2 | 6.0 | 1.2 |
| | Grapefruit fruit-juice (% by mass) | 0.1 | 0.1 | 0.1 | 0.1 | 0.1 | 0.1 | 0.1 | 0.1 |
| | Anhydrous citric acid (% by mass) | 0.1 | 0.1 | 0.1 | 0.1 | 0.1 | 0.1 | 0.1 | 0.1 |
| | Trisodium citrate (% by mass) | 0.12 | 0.12 | 0.12 | 0.12 | 0.12 | 0.12 | 0.12 | 0.12 |
| | Dietary salt (% by mass) | 0.08 | 0.08 | 0.08 | 0.08 | 0.08 | 0.08 | 0.08 | 0.08 |
| | L-ascorbic acid (% by mass) | 0.03 | 0.03 | 0.03 | 0.03 | 0.03 | 0.03 | 0.03 | 0.03 |
| | Grapefruit flavor (% by mass) | 0.2 | 0.2 | 0.2 | 0.2 | 0.2 | 0.2 | 0.2 | 0.2 |
| | Deionized water (% by mass) | Balance | Balance | Balance | Balance | Balance | Balance | Balance | Balance |
| Total amount (% by mass) | | 100 | 100 | 100 | 100 | 100 | 100 | 100 | 100 |
| (B1) Glycyrrhizin (% by mass) | | 0.003 | 0.003 | 0.0003 | 0.03 | 0 | 0.00003 | 0 | 0.003 |
| After sterilization | (A) Non-polymer catechins (% by mass) | 0.129 | 0.129 | 0.129 | 0.129 | 0.129 | 0.129 | 0.129 | 0.517 |
| | (C) Percentage of non-epicatechins (% by mass) | 15.1 | 15.1 | 15.1 | 15.1 | 15.1 | 15.1 | 15.1 | 15.1 |
| | (D) Percentage of gallates (% by mass) | 52.1 | 39.7 | 52.1 | 52.1 | 52.1 | 52.1 | 52.1 | 52.1 |
| | (E) Caffeine/catechin (-) | 0.052 | 0.052 | 0.052 | 0.052 | 0.052 | 0.052 | 0.052 | 0.052 |
| | pH | 4.02 | 4.01 | 3.98 | 4.02 | 3.98 | 3.99 | 4.00 | 4.01 |
| | Flavor evaluation | 2 | 1 | 2 | 1 | 4 | 4 | 2 | 5 |
| Color tone after storage (37°C, 2 weeks) | | A | A | A | A | C | C | D | C |

| | | | | | | | | | |
|---|---|---|---|---|---|---|---|---|---|
| *Reference example Five-stage assessment for flavor evaluation 1: No bitterness, 2: extensively decreased bitterness, 3: decreased bitterness, 4: slightly decreased bitterness, 5: bitter-tasting Color tone after storage A: not changed, B: slightly changed, C: changed, D: significantly changed | | | | | | | | | |

**[Table 2]**

| | | Example 5* | Example 6* | Example 7* | Example 8* | Comparative Example 5 | Comparative Example 6 | Comparative Example 7 |
|---|---|---|---|---|---|---|---|---|
| Composition | Purified product of green-tea extract material with non-polymer catechins (% by mass) | 0.60 | 0.60 | 0.60 | 0.85 | 0.60 | 0.60 | 3.4 |
| | Glycymin (% by mass) | 0.003 | 0.0003 | 0.03 | 0.003 | - | 0.00003 | 0.003 |
| | Green-tea extract liquid (% by mass) | 21.0 | 21.0 | 21.0 | - | 21.0 | 21.0 | 21.0 |
| | Concentrate of tea extract liquid (% by mass) | - | - | - | 0.03 | - | - | - |
| | L-ascorbic acid (% by mass) | 0.05 | 0.05 | 0.05 | 0.05 | 0.05 | 0.05 | 0.05 |
| | Green-tea flavor (% by mass) | 0.100 | 0.100 | 0.100 | - | 0.100 | 0.100 | 0.100 |
| | Tea flavor (% by mass) | - | - | - | 0.100 | - | - | - |
| | Deionized water (% by mass) | Balance | Balance | Balance | Balance | Balance | Balance | Balance |
| Total amount (% by mass) | | 100 | 100 | 100 | 100 | 100 | 100 | 100 |
| (B1) Glycyrrhizin (% by mass) | | 0.003 | 0.0003 | 0.03 | 0.003 | 0 | 0.00003 | 0.003 |
| After sterilization | (A) Non-polymer catechins (% by mass) | 0.121 | 0.121 | 0.121 | 0.129 | 0.121 | 0.121 | 0.531 |
| | (C) Percentage of non-epicatechins (% by mass) | 15.2 | 15.2 | 15.2 | 15.1 | 15.1 | 15.1 | 15.1 |
| | (D) Percentage of gallates (% by mass) | 53.4 | 53.4 | 53.4 | 52.3 | 53.4 | 53.4 | 52.4 |
| | (E) Caffeine/catechin (-) | 0.10 | 0.10 | 0.10 | 0.068 | 0.10 | 0.10 | 0.063 |
| | pH | 4.01 | 3.99 | 4.01 | 3.99 | 4.01 | 4.02 | 4.00 |
| | Flavor evaluation | 1 | 2 | 1 | 2 | 4 | 4 | 5 |
| Color tone after storage (37°C, 2 weeks) | | A | A | A | A | C | B | B |

| | | | | | | | | |
|---|---|---|---|---|---|---|---|---|
| * Reference example Five-stage assessment for flavor evaluation 1: No bitterness, 2: extensively decreased bitterness, 3: decreased bitterness, 4: slightly decreased bitterness, 5: bitter-tasting Color tone after storage A: not changed, B: slightly changed, C: changed, D: significantly changed | | | | | | | | |

### Example 9

A 100-g concentrate of a commercially-available green-tea extract material ("Poyphenon HG", Mitsui Norin Co., Ltd.) was dispersed in 900 g of 90.0% by mass of ethanol and matured for 30 minutes, followed by filtration through No. 2 filter paper with 0.2 µm in pore size. Subsequently, it was added with 200 mL of water and then concentrated under reduced pressure, thereby obtaining a purified product. The percentage of (A) non-polymer catechins in the resulting purified product was 15.2% by mass and the percentage of (C) non-polymer catechin gallates therein was 52.1% by mass. A 8.5-g fraction of the purified product of the green-tea extract material was dissolved in 0.18 g of NEO SAN MARK DC (thaumatin content of 1.1% by mass, manufactured by San-Ei-Gen F.F.I., Inc.). Subsequently, erythritol, anhydrous crystal glucose, grapefruit fruit-juice, anhydrous citric acid, trisodium citrate, dietary salt, L-ascorbic acid, and grapefruit flavor were added to make the total volume 1,000 g. After the mixing, the mixture was subjected to UHT sterilization and filled in a PET bottle. The composition, the results of a flavor evaluation, and the results of a storage test of the beverage packaged in a container are shown in Table 3.

### Example 10

When manufacturing a purified product in Example 9, a 75.0-g fraction of the resulting non-polymer catechin composition (11.47 g of non-polymer catechins, percentage of gallates: 52.1%) was charged into a stainless steel container and added with ion exchange water to make the total volume 1,000 g, followed by adjusting pH to 5.5 by adding 3.0 g of an aqueous solution of 5% by mass of sodium bicarbonate. Subsequently, it was added with a solution while being stirred under conditions of 150 r/min, 22°C. Here the solution was prepared by dissolving 0.27 g (2.4% with respect to the non-polymer catechins) of Kikkoman tannase KTFH (Industrial Grade, 500 U/g or more) in 1.07 g of ion exchange water. After 55 minutes, an enzyme reaction was terminated when pH decreased to 4.24. Subsequently, the stainless steel container was immersed in a hot bath at 95°C and held at 90°C for 10 minutes to completely deactivate enzyme activity, followed by cooling to 25°C. After that, condensation treatment was carried out. (A) Non-polymer catechins of the resulting purified green-tea extract material after the tannase treatment was 16.8% by mass and the percentage of (C) non-polymer gallates was 39.7% by mass. A packaged beverage was prepared in a manner similar to Example 9, except for using 7.7 g of the purified product. The composition, the results of a flavor evaluation, and the results of a storage test of the packaged beverage are shown in Table 3.

### Example 11

A packaged beverage was prepared in a manner similar to Example 9, except for reducing the amount of NEO SAN MARK DC to 0.018 g.

### Example 12

A packaged beverage was prepared in a manner similar to Example 9, except for increasing the amount of NEO SAN MARK DC to 1.8 g.

### Example 13

Green-tea leaves (135 g) from Shizuoka pref. were added to ion exchange water (4 kg) which had been heated to 65°C, followed by extraction for 5 minutes. The tea leaves were then removed from the extract liquid, and the extract liquid was cooled to 25°C or less by a heat exchanger. Subsequently, precipitates and suspended solids were removed from the extract liquid through the Nel filter and then filtered through a disc-shaped depth filter ("Zeta Plus 10C"). A 100-g concentrate of a commercially-available green-tea extract material ("Poyphenon HG", Mitsui Norin Co., Ltd.) was dispersed in 900 g of 90.0% by mass of ethanol and matured for 30 minutes, followed by filtration through No. 2 filter paper with 0. 2 µm in pore size. Subsequently, it was added with 200 mL of water and then concentrated under reduced pressure, thereby obtaining a purified product. A 6.0-g fraction of the purified product of the green-tea extract material, 0.02 g of SAN SWEET T-147 (thaumatin content of 10% by mass, manufactured by San-Ei-Gen F.F.I., Inc.), 210 g of the former green-tea extract liquid, 0.5 g of ascorbic acid, and 1.0 g of green-tea flavor were added and diluted. After making the total volume 1,000 g, the mixture was subjected to UHT sterilization and filled in a PET bottle. The composition, the results of a flavor evaluation, and the results of a storage test of the packaged beverage are shown in Table 4.

### Example 14

A packaged beverage was prepared in a manner similar to Example 13, except for reducing the amount of SAN SWEET T-147 to 0.002 g.

### Example 15

A packaged beverage was prepared in a manner similar to Example 13, except for increasing the amount of SAN SWEET T-147 to 0.2 g.

### Example 16

A 0.85-g fraction of the purified product of the green-tea extract material obtained in a manner similar to Example 13, 0.3 g of the concentrate of a tea extract liquid, 0.02 g of SAN SWEET T-147 (thaumatin content of 10% by mass, manufactured by San-Ei-Gen F.F.I., Inc.), 0.5 g of ascorbic acid, and 1.0 g of a tea flavor were added and diluted, followed by making the total volume 1,000 g, the mixture was subjected to UHT sterilization and filled in a PET bottle. The composition, the results of a flavor evaluation, and the results of a storage test of the packaged beverage are shown in Table 4.

### Comparative Example 8

A packaged beverage was prepared in a manner similar to Example 9, except for increasing the amount of anhydrous crystal glucose to 12 g without using the NEO SAN MARK DC and erythritol.

### Comparative Example 9

A packaged beverage was prepared in a manner similar to Example 9, except for reducing the amount of the NEO SAN MARK DC to 0.0018 g and increasing the amount of anhydrous crystal glucose to 12 g without using erythritol.

### Comparative Example 10

A packaged beverage was prepared in a manner similar to Example 9, except for increasing the amount of anhydrous crystal glucose to 60 g without using the NEO SAN MARK DC and erythritol.

### Comparative Example 11

A packaged beverage was prepared in a manner similar to Example 9, except for increasing the amount of the purified product of the green-tea extract material produced in Example 9 to 34.0 g and increasing the amount of anhydrous crystal glucose to 12 g without using erythritol.

### Comparative Example 12

A packaged beverage was prepared in a manner similar to Example 13, except that SAN SWEET T-147 was not added.

### Comparative Example 13

A packaged beverage was prepared in a manner similar to Example 13, except for reducing SAN SWEET T-147 to 0.0002 g.

### Comparative Example 14

A packaged beverage was prepared in a manner similar to Example 13, except for increasing the amount of the purified product of the green-tea extract material produced in Example 13 to 33.0 g.

As is evident from Table 3 and Table 4, the packaged beverage which contains a high concentration of non-polymer catechins can be significantly prevented from having a bitter taste when it is blended with thaumatin. When the percentage of gallates was adjusted, further significant reduction in bitterness was attained.

**[Table 3]**

| | | Example 9 | Example 10 | Example 11 | Example 12 | Comparative Example 8 | Comparative Example 9 | Comparative Example 10 | Comparative Example 11 |
|---|---|---|---|---|---|---|---|---|---|
| Composition | Purified product of green-tea extract material with non-polymer catechins (% by mass) | 0.85 | 0.77 | 0.85 | 0.85 | 0.85 | 0.85 | 0.85 | 3.4 |
| | NEO SAN MARK DC (% by mass) | 0.018 | 0.018 | 0.0018 | 0.18 | - | 0.00018 | - | 0.018 |
| | Erythritol (% by mass) | 0.8 | 0.8 | 0.8 | 0.8 | - | - | - | - |
| | Anhydrous crystal glucose (% by mass) | 0.4 | 0.4 | 0.4 | 0.4 | 1.2 | 1.2 | 6.0 | 1.2 |
| | Grapefruit fruit-juice (% by mass) | 0.1 | 0.1 | 0.1 | 0.1 | 0.1 | 0.1 | 0.1 | 0.1 |
| | Anhydrous citric acid (% by mass) | 0.1 | 0.1 | 0.1 | 0.1 | 0.1 | 0.1 | 0.1 | 0.1 |
| | Trisodium citrate (% by mass) | 0.12 | 0.12 | 0.12 | 0.12 | 0.12 | 0.12 | 0.12 | 0.12 |
| | Dietary salt (% by mass) | 0.08 | 0.08 | 0.08 | 0.08 | 0.08 | 0.08 | 0.08 | 0.08 |
| | L-ascorbic acid (% by mass) | 0.03 | 0.03 | 0.03 | 0.03 | 0.03 | 0.03 | 0.03 | 0.03 |
| | Grapefruit flavor (% by mass) | 0.2 | 0.2 | 0.2 | 0.2 | 0.2 | 0.2 | 0.2 | 0.2 |
| | Deionized water (% by mass) | Balance | Balance | Balance | Balance | Balance | Balance | Balance | Balance |
| Total amount (% by mass) | | 100 | 100 | 100 | 100 | 100 | 100 | 100 | 100 |
| (B-2) Thaumatin (% by mass) | | 0.0002 | 0.0002 | 0.00002 | 0.002 | 0 | 0.000002 | 0 | 0.0002 |
| After sterilization | (A) Non-polymer catechins (% by mass) | 0.129 | 0.129 | 0.129 | 0.129 | 0.129 | 0.129 | 0.129 | 0.517 |
| | (C) Percentage of non-epicatechin (% by mass) | 15.1 | 15.1 | 15.1 | 15.1 | 15.1 | 15.1 | 15.1 | 15.1 |
| | (D) Percentage of gallates (% by mass) | 52.1 | 39.7 | 52.1 | 52.1 | 52.1 | 52.1 | 52.1 | 52.1 |
| | (E) Caffeine/catechin (-) | 0.052 | 0.052 | 0.052 | 0.052 | 0.052 | 0.052 | 0.052 | 0.052 |
| | pH | 4.00 | 4.01 | 3.98 | 3.97 | 4.03 | 4.01 | 4.02 | 4.00 |
| | Flavor evaluation | 2 | 1 | 2 | 1 | 5 | 4 | 4 | 5 |
| Color tone after storage (37°C, 2 weeks) | | A | A | A | A | C | C | D | C |

| | | | | | | | | | |
|---|---|---|---|---|---|---|---|---|---|
| Five-stage assessment for flavor evaluation 1: No bitterness, 2: extensively decreased bitterness, 3: decreased bitterness, 4: slightly decreased bitterness, 5: bitter-tasting Color tone after storage A: not changed, B: slightly changed, C: changed, D: significantly changed | | | | | | | | | |

**[Table 4]**

| | | Example 13 | Example 14 | Example 15 | Example 16 | Comparative Example 12 | Comparative Example 13 | Comparative Example 14 |
|---|---|---|---|---|---|---|---|---|
| Composition | Purified product of green-tea extract material with non-polymer catechins (% by mass) | 0.60 | 0.60 | 0.60 | 0.85 | 0.60 | 0.60 | 3.3 |
| | SAN SWEET T-147 (% by mass) | 0.002 | 0.0002 | 0.02 | 0.002 | - | 0.00002 | 0.002 |
| | Green-tea extract liquid (% by mass) | 21.0 | 21.0 | 21.0 | - | 21.0 | 21.0 | 21.0 |
| | Concentrate of tea extract liquid (% by mass) | - | - | - | 0.03 | - | - | - |
| | L-ascorbic acid (% by mass) | 0.05 | 0.05 | 0.05 | 0.05 | 0.05 | 0.05 | 0.05 |
| | Green-tea flavor (% by mass) | 0.100 | 0.100 | 0.100 | - | 0.100 | 0.100 | 0.100 |
| | Tea flavor (% by mass) | - | - | - | 0.100 | - | - | - |
| | Deionized water (% by mass) | Balance | Balance | Balance | Balance | Balance | Balance | Balance |
| Total amount (% by mass) | | 100 | 100 | 100 | 100 | 100 | 100 | 100 |
| (B-2) Thaumatin (% by mass) | | 0.0002 | 0.00002 | 0.002 | 0.0002 | 0 | 0.000002 | 0.0002 |
| After sterilization | (A) Non-polymer catechins (% by mass) | 0.121 | 0.121 | 0.121 | 0.130 | 0.121 | 0.121 | 0.531 |
| | (C) Percentage of non-epicatechin (% by mass) | 15.2 | 15.2 | 15.2 | 15.1 | 15.1 | 15.1 | 15.1 |
| | (D) Percentage of gallates (% by mass) | 49.6 | 49.6 | 49.6 | 52.1 | 49.6 | 49.6 | 49.6 |
| | (E) Caffeine/catechin (-) | 0.104 | 0.104 | 0.104 | 0.079 | 0.104 | 0.104 | 0.060 |
| | pH | 4.00 | 4.02 | 4.01 | 3.98 | 3.97 | 3.99 | 4.00 |
| | Flavor evaluation | 1 | 2 | 1 | 2 | 5 | 4 | 5 |
| Color tone after storage (37°C, 2 weeks) | | A | A | A | A | A | B | C |

| | | | | | | | | |
|---|---|---|---|---|---|---|---|---|
| Five-stage assessment for flavor evaluation 1: No bitterness, 2: extensively decreased bitterness, 3: decreased bitterness, 4: slightly decreased bitterness, 5: bitter-tasting Color tone after storage A: not changed, B: slightly changed, C: changed, D: significantly changed | | | | | | | | |

### Reference Example 17

A 100-g concentrate of a commercially-available green-tea extract material ("Poyphenon HG", Mitsui Norin Co., Ltd.) was dispersed in 900 g of 90% by mass of ethanol and matured for 30 minutes, followed by filtration through No. 2 filter paper with 0.2 µm in pore size. Subsequently, it was added with 200 mL of water and then concentrated under reduced pressure, thereby obtaining a purified product. The percentage of (A) non-polymer catechins in the resulting purified product was 15.2% by mass and the percentage of (C) non-polymer catechin gallates therein was 52.1% by mass. A 8.5-g fraction of the purified product of the green-tea extract material was dissolved in 2 g of Sorbit L-70 (sorbitol content of 70% by mass, manufactured by TOWA KASEI Co., Ltd.).

Subsequently, 8 g of erythritol (manufactured by Mitsubishi-Kagaku Foods Corporation), anhydrous crystal glucose, grapefruit fruit-juice, anhydrous citric acid, trisodium citrate, dietary salt, L-ascorbic acid, and grapefruit flavor were added to make the total volume 1,000 g. After the mixing, the mixture was subjected to UHT sterilization and filled in a PET bottle. The composition, the results of a flavor evaluation, and the results of a storage test of the packaged beverage are shown in Table 5.

### Reference Example 18

When manufacturing a purified product in Example 17, a 75-g fraction of the resulting non-polymer catechins composition (11.47g of non-polymer catechins, percentage of gallates: 52.1%) was charged into a stainless steel container and added with ion exchange water to make the total volume 1,000 g, followed by adjusting pH to 5.5 by adding 3g of an aqueous solution of 5% by mass of sodium bicarbonate. Subsequently, it was added with a solution while being stirred under conditions of 150 r/min, 22°C. Here the solution was prepared by dissolving 0.27 g (2.4% with respect to the non-polymer catechins) of Kikkoman tannase KTFH (Industrial Grade, 500 U/g or more) in 1.07 g of ion exchange water. After 55 minutes, an enzyme reaction was terminated when pH decreased to 4.24. Subsequently, the stainless steel container was immersed in a hot bath at 95°C and held at 90°C for 10 minutes to completely deactivate enzyme activity, followed by cooling to 25°C. After that, condensation treatment was carried out. (A) Non-polymer catechins of the resulting purified green-tea extract material after the tannase treatment was 16.8% by mass and the percentage of (C) non-polymer gallates was 39.7% by mass. A packaged beverage was prepared in a manner similar to Example 17, except for using 7.7 g of the purified product. The composition, the results of a flavor evaluation, and the results of a storage test of the packaged beverage are shown in Table 5.

### Reference Example 19

A packaged beverage was prepared in a manner similar to Example 17, except for reducing the amount of Sorbit L-70 to 0.2 g, the amount of erythritol to 0.8 g, and the amount of 1% aqueous sucralose to 1 g.

### Reference Example 20

A packaged beverage was prepared in a manner similar to Example 17, except for increasing the amount of Sorbit L-70 to 3.7 g.

### Reference Example 21

A 5.3-g fraction of the purified product of the green-tea extract material obtained in Example 17, 1.66 g of Chinese green-tea extract powder, 2 g of Sorbit L-70 (sorbitol content of 70% by mass, manufactured by TOWA-KASEI Co., Ltd.), 0.02 g of SAN SWEET T-147 (thaumatin content of 10% by mass, manufactured by San-Ei Gen F. F. I., Inc.), 3 g of aqueous 1% solution of Glycymin (100% glycyrrhizin, manufactured by MARUZEN PHARMACEUTICALS CO., LTD.), ascorbic acid, and a green-tea flavor were added and diluted. After making the total volume 1, 000 g, the mixture was subjected to UHT sterilization and filled in a PET bottle. The composition, the results of a flavor evaluation, and the results of a storage test of the packaged beverage are shown in Table 6.

### Reference Example 22

A packaged beverage was prepared in a manner similar to Example 21, except for reducing the amount of Sorbit L-70 to 0.2 g.

### Reference Example 23

A packaged beverage was prepared in a manner similar to Example 21, except for increasing the amount of Sorbit L-70 to 3.7 g.

### Reference Example 24

A 8.5-g fraction of the purified product of the green-tea extract material obtained in Example 17, 0.5 g of Chinese green-tea extract powder, 2 g of Sorbit L-70 (sorbitol content of 70% by mass, manufactured by TOWA-KASEI Co., Ltd.), 0.02 g of SAN SWEET T-147, 3 g of aqueous 1% solution of Glycymin, ascorbic acid, and a tea flavor were added and diluted. Then, after making the total volume 1,000 g, the mixture was subjected to UHT sterilization and filled in a PET bottle. The composition, the results of a flavor evaluation, and the results of a storage test of the packaged beverage are shown in Table 6.

### Comparative Example 15

A packaged beverage was prepared in a manner similar to Example 17 except that the Sorbit L-70 and erythritol were not added.

### Comparative Example 16

A packaged beverage was prepared in a manner similar to Example 17, except for reducing the amount of Sorbit L-70 to 0.01 g and without adding erythritol.

### Comparative Example 17

A packaged beverage was prepared in a manner similar to Example 17, except that 20 g of anhydrous crystal glucose was added without adding the Sorbit L-70 and erythritol.

### Comparative Example 18

A packaged beverage was prepared in a manner similar to Example 17, except for increasing the amount of the purified product of the green-tea extract material produced in Example 17 to 34 g and reducing the amount of Sorbit L-70 to 0.1 g.

### Comparative Example 19

A packaged beverage was prepared in a manner similar to Example 21 except that the Sorbit L-70, SAN SWEET T-147, and Glycymin were not added.

### Comparative Example 20

A packaged beverage was prepared in a manner similar to Example 21, except for reducing the amount of Sorbit L-70 to 0.01 g and without adding SAN SWEET T-147 and Glycymin.

### Comparative Example 21

A packaged beverage was prepared in a manner similar to Example 21, except for adding 7 g of an aqueous solution of 1% SANET (Acesulfum K) as an artificial sweetening agent without adding Sorbit L-70, SAN SWEET T-147, and Glycymin.

### Comparative Example 22

A packaged beverage was prepared in a manner similar to Example 21, except for increasing the amount of the purified product of the green-tea extract material produced in Example 21 to 33 g and without adding SAN SWEET T-147 and Glycymin.

### Comparative Example 23

A packaged beverage was prepared in a manner similar to Example 24 except that the Sorbit L-70, SAN SWEET T-147, and Glycymin were not added.

As is evident from Table 5 and Table 6, the packaged beverage which contains a high concentration of non-polymer catechins can be significantly prevented from having a bitter taste when it contains sorbitol and a sweetening agent.

**[Table 5]**

| | | Example 17* | Example 18* | Example 19* | Example 20* | Comparative Example 15 | Comparative Example 16 | Comparative Example 17 | Comparative Example 18 |
|---|---|---|---|---|---|---|---|---|---|
| Composition | Purified product of green-tea extract material with non-polymer catechins (% by mass) | 0.85 | 0.77 | 0.85 | 0.85 | 0.85 | 0.85 | 0.85 | 3.4 |
| | (b31) 70% sorbitol (% by mass) | 0.2 | 0.2 | 0.02 | 0.37 | - | 0.001 | - | 0.01 |
| | (b32) Eerythritol (% by mass) | 0.8 | 0.8 | 0.08 | 0.8 | - | - | - | 0.8 |
| | (b32) Sucralose | - | - | 0.001 | - | - | - | - | - |
| | (b32) Anhydrous crystal glucose (% by mass) | - | - | - | - | - | - | 2.0 | - |
| | Grapefruit fruit-juice (% by mass) | 0.1 | 0.1 | 0.1 | 0.1 | 0.1 | 0.1 | 0.1 | 0.1 |
| | Anhydrous citric acid (% by mass) | 0.1 | 0.1 | 0.1 | 0.1 | 0.1 | 0.1 | 0.1 | 0.1 |
| | Trisodium citrate (% by mass) | 0.12 | 0.12 | 0.12 | 0.12 | 0.12 | 0.12 | 0.12 | 0.12 |
| | Dietary salt (% by mass) | 0.08 | 0.08 | 0.08 | 0.08 | 0.08 | 0.08 | 0.08 | 0.08 |
| | L-ascorbic acid (% by mass) | 0.03 | 0.03 | 0.03 | 0.03 | 0.03 | 0.03 | 0.03 | 0.03 |
| | Grapefruit flavor (% by mass) | 0.2 | 0.2 | 0.2 | 0.2 | 0.2 | 0.2 | 0.2 | 0.2 |
| | Deionized water (% by mass) | Balance | Balance | Balance | Balance | Balance | Balance | Balance | Balance |
| Total amount (% by mass) | | 100 | 100 | 100 | 100 | 100 | 100 | 100 | 100 |
| (b31) Sorbitol (% by mass) | | 0.14 | 0.14 | 0.014 | 0.2 | 0 | 0.0007 | 0 | 0.14 |
| (b32) Sweetening agent (% by mass) | | 0.08 | 0.08 | 0.081 | 0.08 | 0 | 0 | 0 | 0.8 |
| After sterilization | (A) Non-polymer catechins (% by mass) | 0.129 | 0.129 | 0.129 | 0.129 | 0.129 | 0.129 | 0.129 | 0.517 |
| | (C) Percentage of non-epicatechin | 15.1 | 15.1 | 15.1 | 15.1 | 15.1 | 15.1 | 15.1 | 15.1 |
| | (D) Percentage of gallates (% by mass) | 52.1 | 39.7 | 52.1 | 52.1 | 52.1 | 52.1 | 52.1 | 52.1 |
| | (E) Caffeine/catechin (-) | 0.052 | 0.052 | 0.052 | 0.052 | 0.052 | 0.052 | 0.052 | 0.052 |
| | (b31)/(A) | 1.09 | 1.09 | 0.11 | 1.55 | 0 | 0.0005 | 0 | 0.02 |
| | pH | 4.01 | 4.00 | 3.99 | 3.98 | 4.01 | 4.02 | 4.00 | 3.99 |
| | Flavor evaluation | 2 | 1 | 2 | 1 | 5 | 4 | 4 | 5 |
| Color tone after storage (37°C, 2 weeks) | | A | A | A | A | A | A | D | C |

| | | | | | | | | | |
|---|---|---|---|---|---|---|---|---|---|
| * Reference example Five-stage assessment for flavor evaluation 1: No bitterness, 2: extensively decreased bitterness, 3: decreased bitterness, 4: slightly decreased bitterness, 5: bitter-tasting Color tone after storage A: not changed, B: slightly changed, C: changed, D: significantly changed | | | | | | | | | |

**[Table 6]**

| | | Example 21* | Example 22* | Example 23* | Example 24* | Comparative Example 19 | Comparative Example 20 | Comparative Example 21 | Comparative Example 22 | Comparative Example 23 |
|---|---|---|---|---|---|---|---|---|---|---|
| Composition | Purified product of green-tea extract material with non-polymer catechins (% by mass) | 0.53 | 0.53 | 0.53 | 0.85 | 0.53 | 0.53 | 0.53 | 3.3 | 0.85 |
| | (b31) 70% Sorbitol (% by mass) | 0.2 | 0.02 | 0.37 | 0.2 | - | 0.001 | - | 0.2 | - |
| | (b32) SAN SWEET T-147 (% by mass) | 0.002 | 0.002 | 0.002 | 0.002 | - | - | - | - | - |
| | (b32) Glycymin (% by mass) | 0.003 | 0.003 | 0.003 | 0.003 | - | - | - | - | - |
| | (b32) SANET (% by mass) | - | - | - | - | - | - | 0.007 | - | - |
| | Green-tea extract material (% by mass) | 0.166 | 0.166 | 0.166 | - | 0.166 | 0.166 | 0.166 | 0.166 | - |
| | Tea extract material (% by mass) | - | - | - | 0.05 | - | - | - | - | 0.05 |
| | Ascorbic acid (% by mass) | 0.05 | 0.05 | 0.05 | 0.05 | 0.05 | 0.05 | 0.05 | 0.05 | 0.05 |
| | Green-tea flavor (% by mass) | 0.100 | 0.100 | 0.100 | - | 0.100 | 0.100 | 0.100 | 0.100 | - |
| | Tea flavor (% by mass) | - | - | - | 0.100 | - | - | - | - | 0.100 |
| | Deionized water (% by mass) | Balance | Balance | Balance | Balance | Balance | Balance | Balance | Balance | Balance |
| Total amount (% by mass) | | 100 | 100 | 100 | 100 | 100 | 100 | 100 | 100 | 100 |
| (b31) Sorbitol (% by mass) | | 0.14 | 0.014 | 0.26 | 0.14 | 0 | 0.0007 | 0 | 0.14 | 0 |
| (b32) Sweetening agent (% by mass) | | 0.0032 | 0.0032 | 0.0032 | 0.0032 | 0 | 0 | 0.007 | 0 | 0 |
| After sterilization | (A) Non-polymer catechins (% by mass) | 0.120 | 0.120 | 0.120 | 0.122 | 0.120 | 0.120 | 0.120 | 0.536 | 0.122 |
| | (C) Percentage of non-epicatechin | 15.1 | 15.1 | 15.1 | 15.1 | 15.1 | 15.1 | 15.1 | 15.1 | 15.1 |
| | (D) Percentage of gallates (% by mass) | 49.6 | 49.6 | 49.6 | 50.2 | 49.6 | 49.6 | 49.6 | 49.6 | 50.2 |
| | (E) Caffeine/catechin (-) | 0.096 | 0.096 | 0.096 | 0.079 | 0.096 | 0.096 | 0.096 | 0.062 | 0.096 |
| | (b31) / (A) | 1.16 | 0.12 | 1.65 | 1.16 | 0 | 0.006 | 0 | 0 | 0 |
| | pH | 4.01 | 4.00 | 3.99 | 3.98 | 4.02 | 3.99 | 4.01 | 3.98 | 4.01 |
| | Flavor evaluation | 1 | 2 | 1 | 1 | 5 | 4 | 5 | 5 | 5 |
| Color tone after storage (37°C, 2 weeks) | | A | A | A | A | A | B | B | B | A |

| | | | | | | | | | | |
|---|---|---|---|---|---|---|---|---|---|---|
| * Reference example Five-stage assessment for flavor evaluation 1: No bitterness, 2: extensively decreased bitterness, 3: decreased bitterness, 4: slightly decreased bitterness, 5: bitter-tasting Color tone after storage A: not changed, B: slightly changed, C: changed, D: significantly changed | | | | | | | | | | |

### Measurement of osmotic pressure

Osmometer OM 802-D Vogel was used.

### Measurement of sodium content

Atomic absorption spectrophotometry (hydrochloric acid extraction)

A sample (5 g) was placed in 10% hydrochloric acid and then added with ion exchange water to make a 1% hydrochloric acid solution.

### Wavelength: 589.6 nm

### Frame: acetylene-air

### Measurement of potassium content

Atomic absorption spectrophotometry (hydrochloric acid extraction)

A sample (5 g) was placed in 10% hydrochloric acid and then added with ion exchange water to make a 1% hydrochloric acid solution.

### Reference Example 25

A 100-g concentrate of a commercially-available green-tea extract material ("Poyphenon HG", Mitsui Norin Co., Ltd.) was dispersed in 900 g of 90.0% by mass of ethanol and matured for 30 minutes, followed by filtration through No. 2 filter paper with 0.2 µm in pore size. Subsequently, it was added with 200 mL of water and then concentrated under reduced pressure, thereby obtaining a purified product. The percentage of non-polymer catechins in the resulting purified product was 15.2% by mass and the percentage of non-polymer catechin gallates therein was 58.1% by mass. A 75.0-g fraction of the resulting non-polymer catechins composition was charged into a stainless steel container and added with ion exchange water to make the total volume 1,000 g, followed by adjusting pH to 5.5 by adding 3.0 g of an aqueous solution of 5% by mass of sodium bicarbonate. Subsequently, it was added with a solution while being stirred under conditions of 150 r/min, 22 °C. Here the solution was prepared by dissolving 0.27 g (2.4% with respect to the non-polymer catechins) of Kikkoman tannase KTFH (Industrial Grade, 500 U/g or more) in 1. 07 g of ion exchange water. After 55 minutes, an enzyme reaction was terminated when pH decreased to 4.24. Subsequently, the stainless steel container was immersed in a hot bath at 95°C and held at 90°C for 10 minutes to completely deactivate enzyme activity, followed by cooling to 25°C. After that, condensation treatment was carried out. Non-polymer catechins of the purified product of the resulting green-tea extract material after the tannase treatment was 15.0% by mass and the percentage of non-polymer gallates was 45.1% by mass.

5.3 g of the purified product of the green-tea extract material, 2.2 g of the concentrate of the green-tea extract material, 36.6 g of anhydrous crystal fructose, and 7.5 g of erythritol were dissolved in water. Next, L-ascorbic acid and a green-tea flavor were added to make the total volume 1,000 g. After the mixing, the mixture was subjected to UHT sterilization and filled in a PET bottle. The composition and the results of a flavor evaluation of the green-tea packaged beverage are shown in Table 7.

### Reference Example 26

A green-tea packaged beverage was prepared in a manner similar to Example 25, except for using 36.6 g of anhydrous crystal glucose instead of anhydrous crystal fructose in Example 25. The composition and the results of a flavor evaluation are shown in Table 7.

### Reference Example 27

A green-tea packaged beverage was prepared in a manner similar to Example 25, except for using 36.6 g of granulated sugar and 18.0 g of erythritol instead of anhydrous crystal fructose in Example 25. The composition and the results of a flavor evaluation are shown in Table 7.

### Reference Example 28

A green-tea packaged beverage was prepared in a manner similar to Example 25, except for using 41.5 g of anhydrous crystal fructose in Example 25. The composition and the results of a flavor evaluation are shown in Table 7.

### Reference Example 29

A green-tea packaged beverage was prepared in a manner similar to Example 25, except for using 0.3 g of L-ascorbic acid in Example 25. The composition and the results of a flavor evaluation are shown in Table 7.

### Reference Example 30

A tea packaged beverage was prepared in a manner similar to Example 25, except for using 8.5 g of the purified product of a green-tea extract material, 0. 5 g of the concentrate of a tea extract liquid, and a tea flavor without using the concentrate of a green-tea extract material and a green-tea flavor in Example 25. The composition and the results of a flavor evaluation are shown in Table 7.

### Reference Example 31

A tea packaged beverage was prepared in a manner similar to Example 30, except that L-ascorbic acid was not used, and 1.0 g of citric acid and lemon flavor were used in Example 30. The composition and the results of a flavor evaluation are shown in Table 7.

### Comparative Example 24

A green-tea packaged beverage was prepared in a manner similar to Example 25, except that erythritol was not used in Example 25. The composition and the results of a flavor evaluation are shown in Table 7.

### Comparative Example 25

A green-tea packaged beverage was prepared in a manner similar to Example 25, except for using 52.0 g of granulated sugar, and without using anhydrous crystal fructose and erythritol in Example 25. The composition and the results of a flavor evaluation are shown in Table 7.

The commercially-available green-tea beverages are shown in Table 7.

### Reference Example 32

A 8.5-g purified product of the green-tea extract material obtained in Example 25, 36.6 g of anhydrous crystal fructose, and 7.5 g of erythritol were dissolved in water. Subsequently, the mixture was added with anhydrous citric acid, trisodium citrate, L-ascorbic acid, and a lemon lime flavor to make the total volume 1,000 g. After the mixing, the mixture was subjected to UHT sterilization and filled in a PET bottle. The composition and the results of a flavor evaluation of the non-tea packaged beverage are shown in Table 8.

### Reference Example 33

A non-tea packaged beverage was prepared in a manner similar to Example 32, except for using 36.6 g of anhydrous crystal glucose instead of anhydrous crystal fructose in Example 32. The composition and the results of a flavor evaluation are shown in Table 8.

### Reference Example 34

A non-tea packaged beverage was prepared in a manner similar to Example 32, except for using 36.6 g of granulated sugar instead of anhydrous crystal fructose in Example 32 and increasing the amount of erythritol. The composition and the results of a flavor evaluation are shown in Table 8.

### Reference Example 35

A non-tea packaged beverage was prepared in a manner similar to Example 32, except for using 41.5 g of anhydrous crystal fructose in Example 32. The composition and the results of a flavor evaluation are shown in Table 8.

### Comparative Example 26

A non-tea packaged beverage was prepared in a manner similar to Example 32 , except for using 52.0 g of anhydrous granulated sugar, and without using anhydrous crystal fructose and erythritol in Example 32. The composition and the results of a flavor evaluation are shown in Table 8.

### Comparative Example 27

A non-tea packaged beverage was prepared in a manner similar to Example 32, except for using 36.6 g of anhydrous crystal fructose and without using erythritol in Example 32. The composition and the results of a flavor evaluation are shown in Table 8.

The commercially-available sport drinks 1 and 2 are shown in Table 8.

**[Table 7]**

| | | Example 25* | Example 26* | Example 27* | Example 28* | Example 29* | Example 30* | Example 31* | Comparative Example 24 | Comparative Example 25 | Commercially-available green tea |
|---|---|---|---|---|---|---|---|---|---|---|---|
| | Purified product of green-tea extract material with non-polymer catechins (% by mass) | 0.53 | 0.53 | 0.53 | 0.53 | 0.53 | 0.85 | 0.85 | 0.53 | 0.53 | |
| | Concentrate of green-tea extract material (% by mass) | 0.22 | 0.22 | 0.22 | 0.22 | 0.22 | - | - | 0.22 | 0.22 | |
| | Concentrate of tea extract material (% by mass) | - | - | - | - | - | 0.05 | 0.05 | - | - | |
| | (b42) Anhydrous crystal fructose (% by mass) | 3.66 | - | - | 4.15 | 3.66 | 3.66 | 3.66 | 3.66 | - | |
| | (b42) Anhydrous crystal glucose (% by mass) | - | 3.66 | - | - | - | - | - | - | - | |
| Composition | (b42) Granulated sugar (% by mass) | - | - | 3.66 | - | - | - | - | - | 5.20 | |
| | (b41) Erythritol (% by mass) | 1.0 | 1.0 | 1.8 | 0.75 | 0.75 | 1.0 | 0.75 | - | - | - |
| | L-ascorbic acid (% by mass) | 0.05 | 0.05 | 0.05 | 0.05 | 0.03 | 0.05 | - | 0.05 | 0.05 | |
| | Citric acid (% by mass) | - | - | - | - | - | 0.1 | 0.1 | - | - | |
| | Green-tea flavor (% by mass) | 0.1 | 0.1 | 0.1 | 0.1 | 0.1 | - | - | 0.1 | 0.1 | |
| | Tea flavor (% by mass) | - | - | - | - | - | 0.1 | 0.1 | - | - | |
| | Lemon flavor (% by mass) | - | - | - | - | - | - | 0.1 | - | - | |
| | 5% aqueous sodium bicarbonate solution (% by mass) | - | - | - | - | - | 0.2 | - | - | - | |
| | Deionized water (% by mass) | Balance | Balance | Balance | Balance | Balance | Balance | Balance | Balance | Balance | |
| Total amount (% by mass) | | 100 | 100 | 100 | 100 | 100 | 100 | 100 | 100 | 100 | |
| Non-polymer catechins (% by mass) | | 0.134 | 0.134 | 0.134 | 0.134 | 0.134 | 0.128 | 0.128 | 0.134 | 0.134 | 0.039 |
| Percentage of non-epicatechin (% by mass) | | 15.2 | 15.2 | 15.2 | 15.2 | 15.2 | 15.2 | 15.2 | 15.2 | 15.2 | 16.5 |
| Percentage of gallates (% by mass) | | 50.3 | 50.3 | 50.3 | 50.3 | 50.3 | 45.2 | 45.2 | 50.3 | 50.3 | 60.2 |
| Caffeine/(A) Catechin (-) | | 0.104 | 0.104 | 0.104 | 0.104 | 0.104 | 0.079 | 0.079 | 0.104 | 0.104 | 0.108 |
| pH after sterilization | | 4.01 | 4.02 | 4.03 | 4.00 | 4.56 | 4.02 | 3.01 | 4.02 | 4.02 | 3.48 |
| Sodium (% by mass) | | 0.005 | 0.005 | 0.005 | 0.005 | 0.001 | 0.005 | 0.005 | 0.005 | 0.005 | 0 |
| Potassium (% by mass) | | 0.007 | 0.007 | 0.007 | 0.007 | 0.007 | 0.003 | 0.003 | 0.007 | 0.007 | 0.003 |
| Osmotic pressure (mOsm/L) | | 315 | 313 | 331 | 356 | 308 | 317 | 315 | 268 | 237 | 435 |
| Calorie (Kcal/240 ml) | | 35 | 35 | 35 | 40 | 35 | 35 | 35 | 35 | 50 | 60 |
| Degree of sweetness | | 5.8 | 3.2 | 4.1 | 5.9 | 5.3 | 5.8 | 5.3 | 4.8 | 5.3 | 9.0 |
| Flavor¹⁾ | | 1 | 1 | 1 | 1 | 1 | 1 | 1 | 3 | 3 | 3 |

| | | | | | | | | | | | |
|---|---|---|---|---|---|---|---|---|---|---|---|
| * Reference example 1) Three-stage assessment for flavor evaluation 1: Excellent 2: Good 3: Allowable | | | | | | | | | | | |

**[Table 8]**

| | | Example 32* | Example 33* | Example 34* | Example 35* | Comparative Example 26 | Comparative Example 27 | Commercially-available sport drink 1 | Commercially-available sport drink 2 |
|---|---|---|---|---|---|---|---|---|---|
| Composition | Purified product of green-tea extract material with non-polymer catechins (% by mass) | 0.85 | 0.85 | 0.85 | 0.85 | 0.85 | 0.85 | - | - |
| | (b42) Anhydrous crystal fructose (% by mass) | 3.66 | - | - | 4.15 | - | 3.66 | | |
| | (b42) Anhydrous crystal glucose (% by mass) | - | 3.66 | - | - | - | - | | |
| | (b42) Granulated sugar (% by mass) | - | - | 3.66 | - | 5.2 | - | | |
| | (b41) Erythritol (% by mass) | 0.75 | 0.75 | 2.0 | 0.75 | - | - | | |
| | Anhydrous citric acid (% by mass) | 0.034 | 0.034 | 0.1 | 0.1 | 0.1 | 0.1 | | |
| | Trisodium citrate (% by mass) | 0.061 | 0.061 | 0.12 | 0.12 | 0.12 | 0.12 | | |
| | L-ascorbic acid (% by mass) | 0.05 | 0.05 | 0.05 | 0.05 | 0.05 | 0.05 | | |
| | Lemon lime flavor (% by mass) | 0.1 | 0.1 | 0.1 | 0.1 | 0.1 | 0.1 | | |
| | Deionized water (% by mass) | Balance | Balance | Balance | Balance | Balance | Balance | | |
| Total amount (% by mass) | | 100 | 100 | 100 | 100 | 100 | 100 | - | - |
| Non-polymer catechins (% by mass) | | 0.127 | 0.127 | 0.127 | 0.127 | 0.127 | 0.127 | 0 | 0 |
| Percentage of non-epicatechin (% by mass) | | 15.2 | 15.2 | 15.2 | 15.2 | 15.2 | 15.2 | - | - |
| Percentage of gallates (% by mass) | | 45.1 | 45.1 | 45.1 | 45.1 | 45.1 | 45.1 | - | - |
| Caffeine/(A) Catechin (-) | | 0.052 | 0.052 | 0.052 | 0.052 | 0.052 | 0.052 | - | - |
| pH after sterilization | | 4.01 | 4.01 | 3.98 | 4.05 | 3.99 | 3.97 | 3.56 | 3.48 |
| Sodium (% by mass) | | 0.032 | 0.032 | 0.032 | 0.032 | 0.032 | 0.032 | 0.048 | 0.049 |
| Potassium (% by mass) | | 0.013 | 0.013 | 0.013 | 0.013 | 0.013 | 0.013 | 0.024 | 0.020 |
| Osmotic pressure (mOsm/L) | | 319 | 321 | 328 | 359 | 273 | 266 | 307 | 341 |
| Calorie (Kcal/240 ml) | | 35 | 35 | 35 | 40 | 50 | 35 | 63 | 65 |
| Degree of sweetness | | 5.3 | 3.0 | 4.2 | 5.9 | 5.3 | 4.8 | 8.5 | 8.5 |
| Flavor¹⁾ | | 1 | 1 | 1 | 1 | 3 | 3 | 3 | 3 |

| | | | | | | | | | |
|---|---|---|---|---|---|---|---|---|---|
| * Reference example Three-stage assessment for flavor evaluation 1: Excellent 2: Good 3: Allowable | | | | | | | | | |

As is evident from Table 7 and Table 8, the packaged beverage of the present invention has moderate osmotic pressure while being low in calories, without impairing its flavor.

## Claims

1. A packaged beverage, comprising:
(A) 0.05 to 0.5% by mass of non-polymer catechins; and
(B2) 0.00001 to 0.005% by mass of thaumatin,
wherein a percentage of (C) a non-epicatechin of non-polymer catechins in (A) is 5 to 25% by mass.

2. The packaged beverage according to claim 1, further comprising:
(B4) 0.01 to 5% by mass of (b41) erythritol, and 0.01 to 5% by mass of (b42) one or more kinds selected from glucose, fructose, a glucose-fructose syrup, and a fructose-glucose syrup.

3. The packaged beverage according to claim 1 or 2, wherein a purified product of a green-tea extract material is blended.

4. The packaged beverage according to any one of claims 1 to 3, wherein
a percentage of (D) non-polymer catechin gallates in (A) the non-polymer catechins is 5 to 55% by mass.

5. The packaged beverage according to any one of claims 1 to 4 , wherein a content weight ratio (E)/(A) of (E) caffeine to (A) the non-polymer catechins is 0.0001 to 0.16.

6. The packaged beverage according to any one of claims 1 to 5, comprising a further artificial sweetening agent.

7. The packaged beverage according to any one of claims 1 to 6 , comprising one or more kinds selected from ascorbic acid, citric acid, gluconic acid, succinic acid, tartaric acid, lactic acid, fumaric acid, malic acid, and salts thereof.

8. The packaged beverage according to any one of claims 1 to 7 , further comprising one or more kinds selected from folic acid, biotin, and vitamin Bs selected from inositol, thiamine hydrochloride, thiamine nitrate, riboflavin, riboflavin 5'-sodium phosphate, niacin, nicotinamide, calcium pantothenate, pyridoxine hydrochloride, and cyanocobalamin.

9. The packaged beverage according to any one of claims 1 to 8, wherein a degree of sweetness is 2 or more when sucrose is 1.

10. The packaged beverage according to any one of claims 1 to 9, which is a non-tea beverage

11. The packaged beverage according to any one of claims 1 to 9, which is a non-fermented tea beverage.

12. The packaged beverage according to any one of claims 1 to 9, which is a semi-fermented tea beverage.

13. The packaged beverage according to any one of claims 1 to 9, which is a fermented tea beverage.

14. The packaged beverage according to any one of claims 1 to 13, which is a carbonated beverage.

15. The packaged beverage according to any one of claims 1 to 13 , which is a non-carbonated beverage.

16. A process of suppressing a bitter taste and stabilizing color tone in a beverage containing 0.05 to 0.5% by mass of (A) non-polymer catechins, comprising the step of:
adding 0.00001 to 0.005% by mass of thaumatin to the beverage.

## Patentansprüche

1. Abgepacktes Getränk, umfassend:
(A) 0,05 bis 0,5 Massen-% nicht-polymere Catechine; und
(B2) 0,00001 bis 0,005 Massen-% Thaumatin,
worin der prozentuale Anteil eines Nicht-Epicatechins (C) der nicht-polymeren Catechine in (A) 5 bis 25 Massen-% beträgt.

2. Abgepacktes Getränk gemäß Anspruch 1, zusätzlich umfassend:
(B4) 0,01 bis 5 Massen-% Erythritol (b41) und 0,01 bis 5 Massen-% von einem oder mehreren Vertretern (b42), ausgewählt aus Glukose, Fruktose, einem Glukose-Fruktose-Sirup und einem Fruktose-Glukose-Sirup.

3. Abgepacktes Getränk gemäß Anspruch 1 oder 2, wobei ein gereinigtes Produkt eines Grünteeextrakt-Materials beigemischt ist.

4. Abgepacktes Getränk gemäß einem der Ansprüche 1 bis 3, worin der prozentuale Anteil von nicht-polymeren Catechin-Gallaten (D) in den nicht-polymeren Catechinen (A) 5 bis 55 Massen-% beträgt.

5. Abgepacktes Getränk gemäß einem der Ansprüche 1 bis 4, worin das Inhalt-Gewichtsverhältnis (E)/(A) von Koffein (E) zu den nicht-polymeren Catechinen (A) 0,0001 bis 0,16 beträgt.

6. Abgepacktes Getränk gemäß einem der Ansprüche 1 bis 5, umfassend ein zusätzliches künstliches Süßungsmittel.

7. Abgepacktes Getränk gemäß einem der Ansprüche 1 bis 6, umfassend einen oder mehrere Vertreter, ausgewählt aus Ascorbinsäure, Zitronensäure, Gluconsäure, Bernsteinsäure, Weinsäure, Milchsäure, Fumarsäure, Äpfelsäure und Salzen davon.

8. Abgepacktes Getränk gemäß einem der Ansprüche 1 bis 7, zusätzlich umfassend einen oder mehrere Vertreter, ausgewählt aus Folsäure, Biotin und B-Vitaminen, die aus Inositol, Thiaminhydrochlorid, Thiaminnitrat, Riboflavin, Riboflavin-5'-Natriumphosphat, Niacin, Nikotinamid, Calciumpantothenat, Pyridoxinhydrochlorid und Cyanocobalamin ausgewählt sind.

9. Abgepacktes Getränk gemäß einem der Ansprüche 1 bis 8, wobei der Süßegrad 2 oder mehr ist, wenn Sucrose = 1 ist.

10. Abgepacktes Getränk gemäß einem der Ansprüche 1 bis 9, das ein Nicht-Teegetränk ist.

11. Abgepacktes Getränk gemäß einem der Ansprüche 1 bis 9, das ein nicht-fermentiertes Teegetränk ist.

12. Abgepacktes Getränk gemäß einem der Ansprüche 1 bis 9, das ein halb-fermentiertes Teegetränk ist.

13. Abgepacktes Getränk gemäß einem der Ansprüche 1 bis 9, das ein fermentiertes Teegetränk ist.

14. Abgepacktes Getränk gemäß einem der Ansprüche 1 bis 13, das ein kohlensäurehaltiges Getränk ist.

15. Abgepacktes Getränk gemäß einem der Ansprüche 1 bis 13, das ein nicht-kohlensäurehaltiges Getränk ist.

16. Verfahren zur Unterdrückung eines bitteren Geschmacks und Farbtonstabilisierung in einem Getränk, das 0,05 bis 0,5 Massen-% nicht-polymere Catechine (A) enthält, umfassend den Schritt des:
Hinzufügens von 0,00001 bis 0,005 Massen-% Thaumatin zu dem Getränk.

## Revendications

1. Boisson emballée, comprenant :
(A) de 0,05 à 0,5% en masse de catéchines non polymères ; et
(B2) de 0,00001 à 0,005% en masse de thaumatine,
dans laquelle un pourcentage d'un non-épicatéchine (C) de catéchines non polymères dans (A) est de 5 à 25% en masse.

2. Boisson emballée selon la revendication 1, comprenant en outre :
(B4) de 0,01 à 5% en masse d'érythritol (b41), et de 0,01 à 5% en masse (b42) d'un ou plusieurs types choisis parmi le glucose, le fructose, un sirop de glucose-fructose, et un sirop de fructose-glucose.

3. Boisson emballée selon la revendication 1 ou 2, dans laquelle un produit purifié d'un matériau extrait de thé vert est mélangé.

4. Boisson emballée selon l'une quelconque des revendications 1 à 3, dans laquelle
un pourcentage de gallates de catéchine non polymères (D) dans des catéchines non polymères (A) est de 5 à 55% en masse.

5. Boisson emballée selon l'une quelconque des revendications 1 à 4, dans laquelle un rapport de teneur en poids (E)/(A) de caféine (E) sur les catéchines non polymères (A) est de 0,0001 à 0,16.

6. Boisson emballée selon l'une quelconque des revendications 1 à 5, comprenant un agent édulcorant artificiel supplémentaire.

7. Boisson emballée selon l'une quelconque des revendications 1 à 6, comprenant un ou plusieurs types choisis parmi l'acide ascorbique, l'acide citrique, l'acide gluconique, l'acide succinique, l'acide tartrique, l'acide lactique, l'acide fumarique, l'acide malique, et leurs sels.

8. Boisson emballée selon l'une quelconque des revendications 1 à 7, comprenant en outre un ou plusieurs types choisis parmi l'acide folique, la biotine, et la vitamine Bs choisie parmi l'inositol, la chlorhydrate de thiamine, la nitrate de thiamine, la riboflavine, la riboflavine 5' -phosphate de sodium, la niacine, le nicotinamide, le pantothénate de calcium, le chlorhydrate de pyridoxine, et la cyanocobalamine.

9. Boisson emballée selon l'une quelconque des revendications 1 à 8, dans lequel un pouvoir sucrant est supérieur ou égal à 2 lorsque le saccharose est 1.

10. Boisson emballée selon l'une quelconque des revendications 1 à 9, qui est une boisson déthéinée.

11. Boisson emballée selon l'une quelconque des revendications 1 à 9, qui est une boisson à base de thé non fermenté.

12. Boisson emballée selon l'une quelconque des revendications 1 à 9, qui est une boisson à base de thé semi-fermenté.

13. Boisson emballée selon l'une quelconque des revendications 1 à 9, qui est une boisson à base de thé fermenté.

14. Boisson emballée selon l'une quelconque des revendications 1 à 13, qui est une boisson gazeuse.

15. Boisson emballée selon l'une quelconque des revendications 1 à 13, qui est une boisson non gazeuse.

16. Processus consistant à éliminer un goût amer et à stabiliser un ton de couleur dans une boisson contenant de 0,05 à 0,5% en masse de catéchines non polymères (A), comprenant l'étape consistant à :
ajouter de 0,00001 à 0,005% en masse de thaumatine à la boisson.
